# EUROPEAN PATENT APPLICATION

(11) **EP 4 852 193 A1**
(43) Date of publication of application: **09.12.2026**
(21) Application number: 25853462.7
(22) Date of filing: 09.04.2025
(51) Int. Cl.: H01M 50/358, H01M 50/383

(54) **BATTERY DEVICE AND ELECTRIC DEVICE**

(30) Priority: 14.08.2024 CN 202411113937
(71) Applicant: Contemporary Amperex Technology Co., Limited, Ningde, Fujian 352100 (CN)
(72) Inventor: LI, Yao, Ningde, Fujian 352100 (CN); CHAI, Jing, Ningde, Fujian 352100 (CN); GU, Mingguang, Ningde, Fujian 352100 (CN); KE, Jianhuang, Ningde, Fujian 352100 (CN); SUN, Liutao, Ningde, Fujian 352100 (CN)
(74) Representative: Aera A/S
(86) International application number: PCT/CN2025/087970
(87) International publication number: WO 2026/036756

(57) **Abstract**

The present application provides a battery device and an electric device. The battery device comprises a battery cell and a case, wherein the case comprises an accommodating space and a frame, the battery cell is accommodated in the accommodating space, the frame is arranged along the outer periphery of the accommodating space, a channel is provided inside the frame, and the channel surrounds the outer periphery of the accommodating space. The frame is further provided with an inlet and an outlet, the inlet is connected to the accommodating space and the channel, and the outlet is connected to the channel and the outside of the case. A blocking member is also provided in the channel, and the blocking member divides the channel to form a flow path connecting the inlet and the outlet and substantially surrounding the accommodating space.

## Description

### CROSS-REFERENCE TO RELATED APPLICATIONS

The present application claims priority to Chinese Patent Application No. 202411113937.X, filed on August 14, 2024 and entitled "BATTERY DEVICE AND ELECTRIC DEVICE", which is incorporated herein by reference in its entirety.

### TECHNICAL FIELD

The present application relates to the technical field of batteries, and in particular, to a battery device and an electric device.

### BACKGROUND

With the development of new energy technologies, a battery is applied more and more widely, for example, in mobile phones, notebook computers, electric bicycles, electric vehicles, electric airplanes, electric ships, electric toy cars, electric toy ships, electric toy airplanes, electric tools, etc.

In the development of battery technology, the impact of abnormal states such as liquid leakage or thermal runaway on the external environment will directly affect the reliability, usage cost and user experience of the terminal product. Therefore, how to effectively reduce the impact on the external environment when an abnormality occurs in a battery is a technical problem to be solved urgently in the battery technology.

### SUMMARY

In view of the above problems, the present application provides a battery device and an electric device, which can effectively reduce the impact on the external environment when an abnormality occurs in the battery device.

According to a first aspect, an embodiment of the present application provides a battery device. The battery device includes a battery cell and a case, the case including an accommodating space and a frame, where the battery cell is accommodated in the accommodating space, the frame is provided along an outer periphery of the accommodating space, a channel is provided inside the frame, and the channel surrounds the outer periphery of the accommodating space. The frame is further provided with an inlet and an outlet, the inlet is connected to the accommodating space and the channel, and the outlet is connected to the channel and the outside of the case. A blocking component is also provided in the channel, and the blocking component separates the channel to form a flow path connecting the inlet and the outlet and substantially surrounding the accommodating space.

The blocking component in the above technical solution can block the flow of a fluid, and can provide a flow path substantially surrounding the accommodating space for the fluid flowing from the inlet to the outlet, thereby extending the flow path and time of the fluid in the channel. Thus, the own temperature of the fluid can be effectively reduced in the channel, and at the same time, impurities such as metal particles doped in the fluid can be better precipitated in the channel, thereby reducing the risk of damage to other components located outside the battery device and the risk of great pollution to the environment after the fluid is discharged to the outside of the battery device. In this way, it is possible to effectively reduce the impact on the external environment when an abnormality occurs in the battery device.

In some embodiments of the first aspect, the case further includes a separating component, the separating component is provided in the channel and separates the channel into N layers of sub-channels in a direction intersecting an extension direction of the channel, the inlet and the outlet are respectively provided corresponding to different layers of the sub-channels, and N is greater than or equal to 2. The separating component is provided with a communication hole, and two adjacent layers of sub-channels are communicated through the communication hole.

In the above technical solution, by providing the separating component, the flow path and time of the fluid in the channel can be further extended, so that the impact on the external environment when an abnormality occurs in the battery device can be further reduced.

In some embodiments of the first aspect, the flow path substantially encircles the accommodating space N times.

The above technical solution can further extend the flow path and time of the fluid in the channel, thereby further reducing the impact on the external environment when an abnormality occurs in the battery device.

In some embodiments of the first aspect, the separating component includes a first separating member and a second separating member, the first separating member and the second separating member are spaced apart in a direction intersecting the extension direction of the channel, and divide the channel into a first sub-channel, a second sub-channel, and a third sub-channel that are stacked in the direction intersecting the extension direction of the channel, and the second sub-channel is located between the first sub-channel and the third sub-channel. The communication hole includes a first hole and a second hole, the first hole is provided in the first separating member, the first sub-channel and the second sub-channel are communicated through the first hole, the second hole is provided in the second separating member, and the second sub-channel and the third sub-channel are communicated through the second hole. The inlet is provided corresponding to one of the first sub-channel and the third sub-channel, and the outlet is provided corresponding to the other one of the first sub-channel and the third sub-channel.

In the above technical solution, the channel is provided to be a three-layer structure including the first sub-channel, the second sub-channel, and the third sub-channel, so that the flow path of the fluid in the channel can be further extended, and the impact on the external environment when an abnormality occurs in the battery device can be further reduced.

In some embodiments of the first aspect, the first separating member and the second separating member are spaced apart along a height of the case, the first sub-channel is located at a bottom of the case, and the third sub-channel is located at a top of the case. The inlet is provided corresponding to the first sub-channel, and the outlet is provided corresponding to the third sub-channel.

The above technical solution can effectively reduce the content of impurities such as metal particles in the fluid discharged to the outside of the battery device, thereby further reducing the impact on the external environment.

In some embodiments of the first aspect, the first hole and the second hole are both provided close to the blocking component, the inlet is provided corresponding to the first sub-channel, and the outlet is provided corresponding to the third sub-channel. The inlet and the first hole are respectively located on two opposite sides of the blocking component in an extension direction of the first sub-channel, the first hole and the second hole are respectively located on two opposite sides of the blocking component in an extension direction of the second sub-channel, and the second hole and the outlet are respectively located on two opposite sides of the blocking component in an extension direction of the third sub-channel.

In the above technical solution, the first hole and the second hole are both provided close to the blocking component, so that the flow path of the fluid in the channel can be further extended, and the impact on the external environment when an abnormality occurs in the battery device can be further reduced.

In some embodiments of the first aspect, the blocking component includes a first blocking member, a second blocking member, and a third blocking member, and the first blocking member is provided in the first sub-channel and separates the first sub-channel in an extension direction of the first sub-channel. The second blocking member is provided in the second sub-channel and separates the second sub-channel in the extension direction of the second sub-channel. The third blocking member is provided in the third sub-channel and separates the third sub-channel in the extension direction of the third sub-channel.

In the above technical solution, the blocking component is provided to be a split structure including the first blocking member, the second blocking member and the third blocking member, so that the structures or positions of the first blocking member, the second blocking member and the third blocking member can be flexibly adjusted according to different requirements, thereby improving the flexibility and applicability of the blocking component.

In some embodiments of the first aspect, in a stacking direction of the first sub-channel, the second sub-channel, and the third sub-channel, the first blocking member, the second blocking member, and the third blocking member at least partially overlap. In this way, the positions of the first blocking member, the second blocking member and the third blocking member on the case are substantially the same, which reduces the structural complexity and facilitates maintenance.

In some embodiments of the first aspect, the first blocking member, the second blocking member, and the third blocking member are integrally formed.

On the one hand, the first blocking member, the second blocking member, and the third blocking member do not need to be connected by an additional connecting process, which simplifies the manufacturing process. Meanwhile, compared with a case where the first blocking member, the second blocking member and the third blocking member are connected by an additional connecting process, the first blocking member, the second blocking member and the third blocking member in an integrated structure have higher connection firmness.

In some embodiments of the first aspect, an opening area of the communication hole is 50 mm² to 3,000 mm².

In the above technical solution, by setting the opening area of the communication hole within the above range, the overall flow time of the fluid in the channel can be within an appropriate range, thereby reducing the impact on the external environment when an abnormality occurs in the battery device, and reducing the risk of excessive pressure generated inside the frame.

In some embodiments of the first aspect, the opening area of the communication hole is 200 mm² to 1,300 mm². This can further improve the effect of reducing the impact on the external environment when an abnormality occurs in the battery device and the risk of excessive pressure generated inside the frame.

In some embodiments of the first aspect, an area of a cross section of the sub-channel perpendicular to an extension direction of the sub-channel is 50 mm² to 3,000 mm².

In the above technical solution, the area of the cross section of the sub-channel perpendicular to the extension direction of the sub-channel is set within the above range, so that the overall flow time of the fluid in the channel can be within an appropriate range, thereby reducing the impact on the external environment when an abnormality occurs in the battery device and reducing a risk of excessive pressure generated inside the frame.

In some embodiments of the first aspect, the area of the cross section of the sub-channel perpendicular to the extension direction of the sub-channel is 200 mm² to 13,00 mm². This can further improve the effect of reducing the impact on the external environment when an abnormality occurs in the battery device and the risk of excessive pressure generated inside the frame.

In some embodiments of the first aspect, the frame includes M beam bodies, the M beam bodies are provided along the outer periphery of the accommodating space and are connected to each other end to end, a cavity is formed inside each of the beam bodies, the cavities of the M beam bodies are connected to each other to form the channel, and M is greater than or equal to 2. The blocking component is provided at a position where a first beam body and an M^{th} beam body are connected, and separates a cavity of the first beam body and a cavity of the M^{th} beam body at the position where the first beam body and the M^{th} beam body are connected. The inlet is provided in the first beam body, and the outlet is provided in the M^{th} beam body.

In the above technical solution, the M beam bodies are provided to form the frame, which helps reduce the assembly difficulty of the blocking component, thereby reducing the production cost.

In some embodiments of the first aspect, the frame includes M beam bodies, the M beam bodies are provided along the outer periphery of the accommodating space and are connected to each other end to end, a cavity is formed inside each of the beam bodies, the cavities of the M beam bodies are connected to each other to form the channel, and M is greater than or equal to 2. The blocking component is provided at a position where a first beam body and an M^{th} beam body are connected, and separates a cavity of the first beam body and a cavity of the M^{th} beam body at the position where the first beam body and the M^{th} beam body are connected. In a case where the number N of layers of the sub-channels is an even number, the inlet and the outlet are provided in the first beam body. In a case where the number N of layers of the sub-channels is an odd number, the inlet is provided in the first beam body, and the outlet is provided in the M^{th} beam body.

Such an arrangement can extend the flow path and time of the fluid in the channel to the maximum extent in a case of a certain number of layers of sub-channels.

In some embodiments of the first aspect, each of the beam bodies includes two end faces that are opposite to each other in a length direction of the beam body, and the M beam bodies are connected to each other end to end via the end faces.

In the above technical solution, the two end faces of the beam body that are opposite to each other in the length direction of the beam body can be inclined, which can reduce the operation difficulty of direct connection between the plurality of beam bodies and help to improve the production efficiency.

In some embodiments of the first aspect, each of the beam bodies includes a beam main body and N-1 first reinforcing ribs, the cavity is provided in the beam main body, and the N-1 first reinforcing ribs are provided in the cavity. The first reinforcing ribs of every two adjacent beam bodies are butt-connected to form N-1 separating components, and the N-1 separating components divide the channel into N sub-channels in the direction intersecting with the extension direction of the channel. The first reinforcing rib of at least one of the first beam body and the M^{th} beam body is provided with the communication hole. In the sub-channel provided with the inlet or the outlet, the communication hole is located at an end of the sub-channel away from the inlet or the outlet.

In the above technical solution, the first reinforcing ribs of the plurality of beam bodies are connected to form the separating component, which is beneficial to reducing the preparation difficulty of the frame and reducing the production cost.

In some embodiments of the first aspect, the case further includes a first sealing member, and the first sealing member is clamped between the first reinforcing ribs of two adjacent beam bodies.

In the above technical solution, by providing the first sealing member, the first reinforcing ribs of the two adjacent beam bodies can be hermetically connected without welding the first reinforcing ribs of the two adjacent beam bodies, thereby reducing the overall preparation difficulty, improving the production efficiency and reducing the cost.

In some embodiments of the first aspect, the case further includes a plurality of connecting members, and a quantity of the connecting members matches a quantity of the beam bodies. Every two adjacent beam bodies are connected by each of the connecting members, a chamber is provided inside each of connecting members, and the cavities of the plurality of beam bodies are communicated through the chamber. The blocking component is provided at a position where the first beam body and the M^{th} beam body are connected by each of the connecting members.

In the above technical solution, the connecting member is introduced to connect two adjacent beam bodies, so that the connecting difficulty between the plurality of beam bodies can be effectively reduced, thereby further improving overall production efficiency of the battery device and reducing the cost.

In some embodiments of the first aspect, the beam body includes a beam main body and N-1 first reinforcing ribs, the cavity is provided in the beam main body, and the N-1 first reinforcing ribs are provided in the cavity. Each of the connecting members includes a connecting main body and N-1 second reinforcing ribs, the connecting main body is connected to the beam main bodies of two adjacent beam bodies, the cavity is provided in the connecting main body, and the N-1 second reinforcing ribs are provided in the cavity. Each of the second reinforcing ribs is butt-connected to the first reinforcing ribs of two adjacent beam bodies to form N-1 separating components, and the N-1 separating components divide the channel into N layers of sub-channels in the direction intersecting the extension direction of the channel. The first reinforcing rib of at least one of the first beam body and the M^{th} beam body is provided with the communication hole. In the sub-channel provided with the inlet or the outlet, the communication hole is located at an end of the sub-channel away from the inlet or the outlet.

In the above technical solution, the second reinforcing rib is provided to connect the first reinforcing ribs of the two adjacent beam bodies, so that the connecting difficulty between the first reinforcing ribs of the plurality of beam bodies can be further reduced, thereby further improving overall production efficiency of the battery device and reducing the cost. In addition, in the sub-channel provided with the inlet or the outlet, the communication hole is located at an end of the sub-channel away from the inlet or the outlet, which can further extend the flow path of the fluid in the channel, thereby further reducing the impact on the external environment when an abnormality occurs in the battery device.

In some embodiments of the first aspect, the case further includes a second sealing member, and the second sealing member is connected between the second reinforcing rib and the first reinforcing rib.

In the above technical solution, by providing the second sealing member, the second reinforcing rib and the first reinforcing rib can be hermetically connected without welding the second reinforcing rib and the first reinforcing rib, thereby reducing the overall preparation difficulty, improving the production efficiency and reducing the cost.

In some embodiments, the battery device further includes a pressure relief mechanism, where the pressure relief mechanism is communicated with the outlet.

In the above technical solution, the pressure relief mechanism is provided at the outlet, so that the fluid in the channel can be discharged to the outside of the battery device only when the fluid reaches a specific condition, to reduce unnecessary fluid discharge, thereby further reducing the impact on the external environment.

In a third aspect, the present application provides an electric device including the battery device according to any one of the embodiments in the first aspect, and the battery device is configured to provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred embodiments below. The accompanying drawings are used only for the purpose of illustrating the preferred implementations and are not to be construed as limitations on the present application. Moreover, throughout the drawings, identical reference numerals are used to designate identical components. In the accompanying drawings:
FIG. 1 is a schematic structural view of a vehicle according to some embodiments of the present application;
FIG. 2 is a schematic perspective view of a battery device according to some embodiments of the present application;
FIG. 3 is a schematic front view of a case of a battery device according to some embodiments of the present application;
FIG. 4 is a schematic cross-sectional view along a line A-A in FIG. 3;
FIG. 5 is a schematic cross-sectional view along a line B-B in FIG. 3;
FIG. 6 is a schematic perspective cutaway view of a case according to some embodiments of the present application;
FIG. 7 is a schematic flow diagram of a fluid in the case shown in FIG. 6;
FIG. 8 is a schematic exploded view of a case according to some embodiments of the present application;
FIG. 9 is a schematic perspective view of a beam body of the case shown in FIG. 8;
FIG. 10 is a schematic top view of another case according to some embodiments of the present application;
FIG. 11 is a schematic cross-sectional view along a line C-C in FIG. 10;
FIG. 12 is a schematic perspective cutaway view of another case according to some embodiments of the present application;
FIG. 13 is a schematic partial enlarged view of A in FIG. 12;
FIG. 14 is a schematic flow diagram of a fluid in the case shown in FIG. 12;
FIG. 15 is a schematic exploded view of another case according to some embodiments of the present application;
FIG. 16 is a schematic perspective view of a beam body of the case shown in FIG. 15;
FIG. 17 is a schematic top view of yet another case according to some embodiments of the present application;
FIG. 18 is a schematic cross-sectional view along a line D-D in FIG. 17;
FIG. 19 is a schematic exploded view of another case according to some embodiments of the present application;
FIG. 20 is a schematic partial exploded view of another case according to some embodiments of the present application;
FIG. 21 is a schematic perspective view of a first sealing member according to some embodiments of the present application;
FIG. 22 is a schematic partial exploded view of another case according to some embodiments of the present application;
FIG. 23 is a schematic partial exploded view of another case according to some embodiments of the present application;
FIG. 24 is a schematic perspective view of a beam body and a connecting member of a battery device in cooperation, according to some embodiments of the present application;
FIG. 25 is a schematic partial exploded view of another case according to some embodiments of the present application;
FIG. 26 is a schematic perspective view of a second sealing member according to some embodiments of the present application; and
FIG. 27 is a schematic perspective view of another battery device according to some other embodiments of the present application.

Reference numerals in specific implementations are as follows:
1, vehicle; 2, battery device; 3, controller; 4, motor;
10, battery cell; 20, case; 21, accommodating space; 22, frame; 221, channel; 2211, sub-channel; 2211a, first sub-channel; 2211b, second sub-channel; 2211c, third sub-channel; 222, inlet; 223, outlet; 23, blocking component; 23a, first blocking member; 23b, second blocking member; 23c, third blocking member; 24, separating component; 24a, first separating member; 24b, second separating member; 241, communication hole; 241a, first hole; 241b, second hole; 25, beam body; 251, cavity; 252, first surface; 253, second surface; 254, first end face; 255, beam main body; 256, first reinforcing rib;
30, first sealing member; 40, connecting member; 41, chamber; 42, connecting main body; 43, second reinforcing rib; 50, second sealing member; and 60, pressure relief mechanism.

### DETAILED DESCRIPTION OF PREFERRED EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are some but not all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

The term "parallel" in the present application not only includes the case of absolute parallelism, but also includes the case of approximate parallelism conventionally recognized in engineering. It should be understood that "perpendicular" includes not only absolute perpendicularity but also substantial perpendicularity as conventionally recognized in engineering.

In the present application, a battery cell may comprise a lithium-ion secondary battery cell, a lithium-ion primary battery cell, a lithium-sulfur battery cell, a sodium-lithium ion battery cell, a sodium-ion battery cell, a magnesium-ion battery cell, or the like, which is not limited in the embodiments of the present application. The battery cell may be in a shape of a cylinder, a flat body, a cuboid, or the like, which is not limited in the embodiments of the present application.

A battery device mentioned in the embodiments of the present application refers to a single physical module including one or a plurality of battery cells to provide a higher voltage and capacity. When there are a plurality of battery cells, the plurality of battery cells are connected in series, in parallel, or in series-parallel via a busbar component.

In some embodiments, the battery device may be a battery module; when there are a plurality of battery cells, the plurality of battery cells are arranged and fixed to form a battery module.

In some embodiments, the battery device may be a battery pack including a case and a battery cell, and the battery cell or the battery module is accommodated in the case.

In some embodiments, the case may be a part of a chassis structure of a vehicle. For example, a part of the case may be at least a part of a floor of a vehicle, or a part of the case may be at least a part of a cross beam and a side beam of a vehicle.

In some embodiments, the battery device may be an energy storage device. The energy storage device includes an energy storage container, an energy storage cabinet, and the like.

With the development of new energy technologies, a battery is applied more and more widely, for example, in mobile phones, notebook computers, electric bicycles, electric vehicles, electric airplanes, electric ships, electric toy cars, electric toy ships, electric toy airplanes, electric tools, etc.

In the development of battery technology, the impact of abnormal states such as liquid leakage or thermal runaway on the external environment will directly affect the reliability, usage cost and user experience of the terminal product.

When an abnormality occurs in the battery device, a large amount of fluid is generated inside the battery device. For example, when a battery cell in the battery device experiences thermal runaway, a large amount of high-temperature gas is generated inside the battery device, and the high-temperature gas is doped with impurities such as some metal particles; when the electrolyte of the battery cell leaks in the battery device, a large amount of electrolyte is generated inside the battery device. When an abnormality occurs in the battery device, if the fluid generated inside the battery device is discharged to the outside of the battery device as it is in a short time, not only other components located around the outside of the battery device are easily damaged, but also the environment is greatly polluted.

Based on the above considerations, the embodiments of the present application provide a battery device, the battery device includes a battery cell and a case, the case includes an accommodating space and a frame, the battery cell is accommodated in the accommodating space, the frame is provided along an outer periphery of the accommodating space, a channel is provided inside the frame, and the channel surrounds the periphery of the accommodating space. The frame is further provided with an inlet and an outlet, the inlet is connected to the accommodating space and the channel, and the outlet is connected to the channel and the outside of the case. A blocking component is also provided in the channel, and the blocking component separates the channel to form a flow path connecting the inlet and the outlet and substantially surrounding the accommodating space.

When an abnormality occurs in the battery device, the fluid generated inside the battery device can enter the channel through the inlet, flow through the channel to the outlet, and then be discharged to the outside of the battery device through the outlet. The fluid may be a gas or a liquid. The blocking component in the above technical solution can block the flow of a fluid, and can provide a flow path substantially surrounding the accommodating space for the fluid flowing from the inlet to the outlet, thereby extending the flow path and time of the fluid in the channel. Thus, the own temperature of the fluid can be effectively reduced in the channel, and at the same time, impurities such as metal particles doped in the fluid can be better precipitated in the channel, thereby reducing the risk of damage to other components located outside the battery device and the risk of great pollution to the environment after the fluid is discharged to the outside of the battery device. In this way, it is possible to effectively reduce the impact on the external environment when an abnormality occurs in the battery device.

The technical solutions described in the embodiments of the present application are applicable to the battery device and the electric device using the battery device.

The electric device may be a vehicle, a mobile phone, a portable device, a notebook computer, a ship, a spacecraft, an electric toy, an electric tool, and the like. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

It should be understood that the technical solutions described in the embodiments of the present application are not limited to the battery device and electric device described above, but may be applicable to all battery devices including the battery case and electric devices using the battery devices, but for brevity of description, the following embodiments are described by using an electric vehicle as an example.

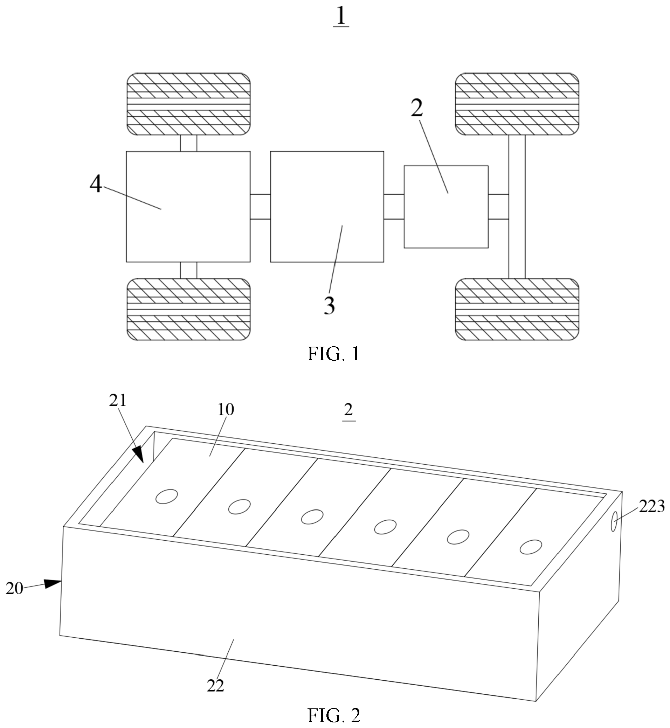

FIG. 1 is a schematic structural view of a vehicle according to some embodiments of the present application.

Continuously referring to FIG. 1, inside the vehicle 1, a battery device 2 is provided, which may be provided at the bottom, head, or tail of the vehicle 1. The battery device 2 may be configured to power the vehicle 1; for example, the battery device 2 may be used as an operating power supply of the vehicle 1.

The vehicle 1 may further include a controller 3 and a motor 4, the controller 3 being configured to control the battery device 2 to power the motor 4, e.g., for a working power requirement of the vehicle 1 during starting, navigating, and driving.

In some embodiments of the present application, the battery device 2 may be used not only as an operating power source for the vehicle 1, but also as a driving power source for the vehicle 1, instead of or partially instead of fuel or natural gas to provide driving power for the vehicle 1.

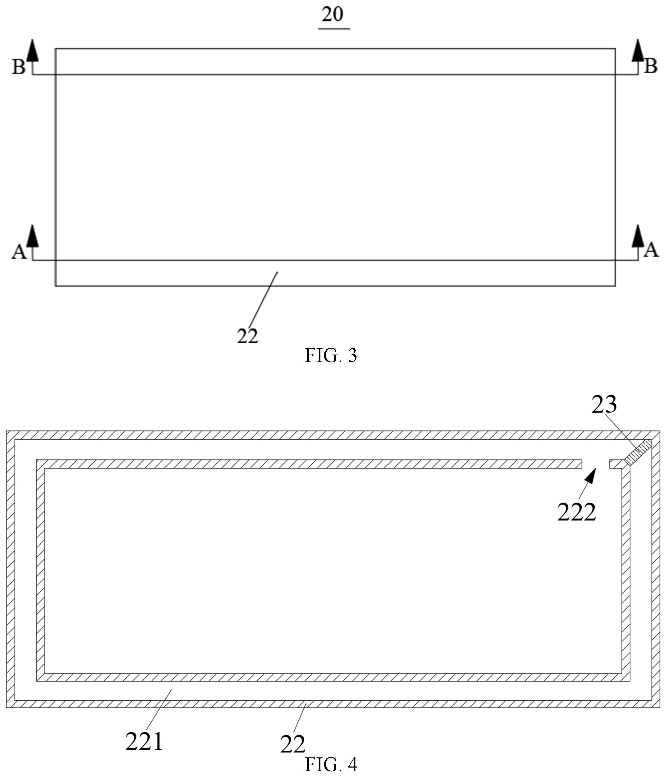

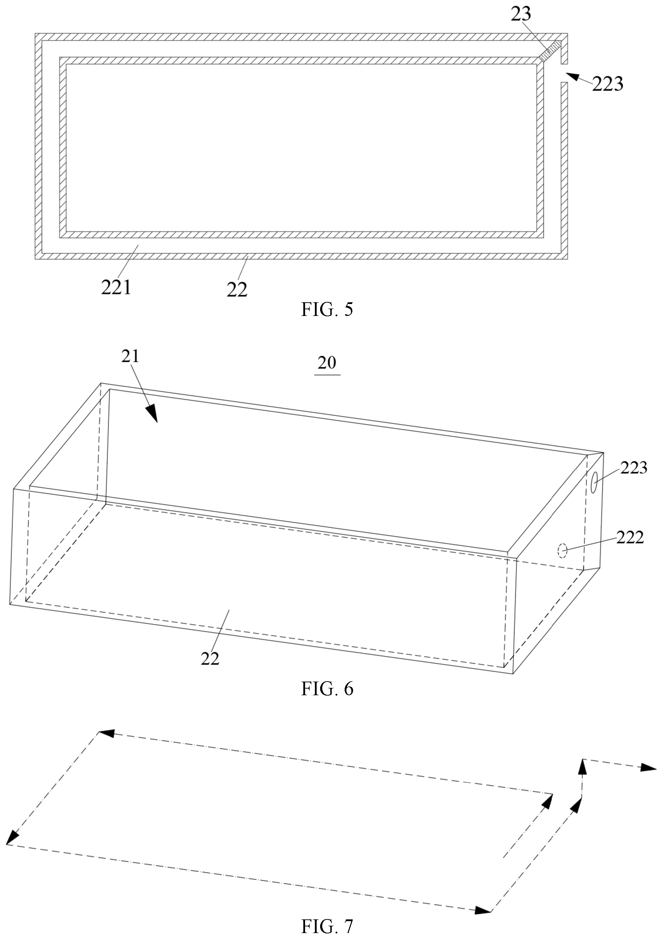

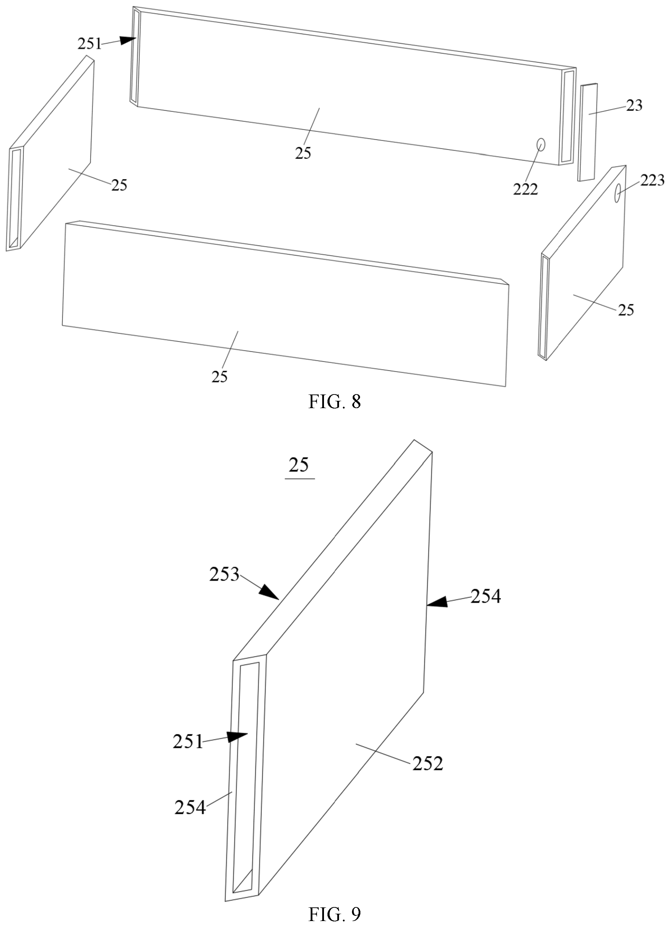

FIG. 2 is a schematic perspective view of a battery device according to some embodiments of the present application; FIG. 3 is a schematic front view of a case of a battery device according to some embodiments of the present application; FIG. 4 is a schematic cross-sectional view along a line A-A in FIG. 3; FIG. 5 is a schematic cross-sectional view along a line B-B in FIG. 3; FIG. 6 is a schematic perspective cutaway view of a case according to some embodiments of the present application; FIG. 7 is a schematic flow diagram of a fluid in the case shown in FIG. 6; FIG. 8 is a schematic exploded view of a case according to some embodiments of the present application; and FIG. 9 is a schematic perspective view of a beam body of the case shown in FIG. 8.

Referring to FIG. 2 to FIG. 9, an embodiment of the present application provides a battery device 2, where the battery device 2 includes a battery cell 10 and a case 20, the case 20 includes an accommodating space 21 and a frame 22, the battery cell 10 is accommodated in the accommodating space 21, the frame 22 is provided along an outer periphery of the accommodating space 21, a channel 221 is provided inside the frame 22, and the channel 221 surrounds the periphery of the accommodating space 21. The frame 22 is further provided with an inlet 222 and an outlet 223, the inlet 222 is connected to the accommodating space 21 and the channel 221, and the outlet 223 is connected to the channel 221 and the outside of the case 20. A blocking component 23 is further provided in the channel 221, and the blocking component 23 separates the channel 221 into a flow path connecting the inlet 222 and the outlet 223 and substantially surrounding the accommodating space 21.

In the battery device 2, the case 20 is configured to accommodate the battery cell 10, and the case 20 may have various structures, for example, cylinder, cuboid, and the like. One or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 may be directly connected in series, in parallel, or in a combination of both, and the whole of the plurality of battery cells 10 is accommodated in the case 20. Certainly, the plurality of battery cells 10 may be subjected to series connection, or parallel connection, or series-parallel connection to form a battery module, and a plurality of battery modules are integrated by series connection, parallel connection, or series-parallel connection, and accommodated in the case 20.

Exemplarily, the frame 22 may be a cuboid-shaped frame 22, a cylindrical frame 22, or another irregular frame 22. Correspondingly, the shape of the accommodating space 21 matches the shape of the frame 22. If the frame 22 is the cuboid-shaped frame 22, the accommodating space 21 is cuboid-shaped. If the frame 22 is the cylindrical frame 22, the accommodating space 21 is a cylinder.

Optionally, the frame 22 may be made of, but not limited to, a metal or non-metal material, for example, the metal material may be copper, a copper alloy, aluminum, an aluminum alloy, nickel, a nickel alloy, titanium, a titanium alloy, or stainless steel, and the non-metal material may be ceramic, polyethylene, polypropylene, polyvinyl chloride, polyimide, or polyamide.

In the battery device 2, one or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 may be directly connected in series, in parallel, or in a combination of both, and the whole of the plurality of battery cells 10 is accommodated in the case 20. Certainly, the plurality of battery cells 10 may be subjected to series connection, or parallel connection, or series-parallel connection to form a battery module, and a plurality of battery modules are integrated by series connection, parallel connection, or series-parallel connection, and accommodated in the case 20.

In some examples, a plurality of battery cells 10 are provided. The plurality of battery cells 10 are first subjected to series connection, parallel connection, or series-parallel connection to form the battery module. A plurality of battery modules are subjected to series connection, parallel connection, or series-parallel connection to form a combination, and the combination is accommodated in a case 20.

The plurality of battery cells 10 in the battery module may be electrically connected by a busbar component to implement parallel connection, series connection, or series-parallel connection of the plurality of battery cells 10 in the battery module.

The blocking component 23 is provided in the channel 221 and separates the channel 221 in an extension direction of the channel 221, the blocking component 23 is configured to block the flow of the fluid in the channel 221, and the inlet 222 and the outlet 223 are provided close to the blocking component 23 to provide a flow path substantially surrounding the accommodating space 21 for the fluid flowing from the inlet 222 to the outlet 223. The flow path refers to a route through which the fluid in the channel 221 can pass, and in some examples, the flow path may also be referred to as a channel.

Exemplarily, the blocking component 23 is provided a first end and a second end, the channel 221 is connected between the first end and the second end, the fluid can flow between the first end and the second end, the inlet 222 is provided close to the first end, and the outlet 223 is provided close to the second end. After the fluid enters the channel 221 from the inlet 222, the fluid blocked by the first end of the blocking component 23 flows in a direction away from the blocking component 23, and reaches the second end of the blocking component 23 after substantially surrounding the accommodating space 21, and then is output to the external environment from the outlet 223. The term "substantially surround" means that the flow path of the fluid in the channel 221 may substantially surround the accommodating space 21 for one round, or may surround the accommodating space 21 for multiple rounds in a manner similar to a plurality of annular stacks, or may surround the accommodating space 21 for multiple rounds in a manner similar to a spiral.

In some examples, the channel 221 is of a single-layer structure surrounding the outer periphery of the accommodating space 21, and after the fluid enters the channel 221 from the inlet 222, the fluid blocked by the first end of the blocking component 23 flows in a direction away from the blocking component 23, reaches the second end of the blocking component 23 after substantially surrounding the accommodating space 21 for one round, and then is output to the external environment from the outlet 223.

In some examples, the channel 221 is of a multi-layer structure surrounding the outer periphery of the accommodating space 21, which may be, but is not limited to, a two-layer structure, a three-layer structure, a four-layer structure, or the like, and the following description is given by taking the channel 221 configured as a two-layer structure surrounding the outer periphery of the accommodating space 21 as an example. The channel 221 includes a first sub-channel 2211a and a second sub-channel 2211b stacked in a direction intersecting the extension direction of the channel 221, the first sub-channel 2211a and the second sub-channel 2211b both surround the outer periphery of the accommodating space 21, the first sub-channel 2211a and the second sub-channel 2211b are communicated through a communication hole 241, the communication hole 241 is provided close to the blocking component 23, the inlet 222 is provided corresponding to the first sub-channel 2211a, and the outlet 223 is provided corresponding to the second sub-channel 2211b. After entering the first sub-channel 2211a from the inlet 222, the fluid blocked by the first end of the blocking component 23 flows in the first sub-channel 2211a in a direction away from the blocking component 23, the fluid flows in the first sub-channel 2211a in the circumferential direction of the accommodating space 21 and substantially surrounds the accommodating space 21 for one round, then reaches the blocking component 23, and then enters the second sub-channel 2211b from the communication hole 241, the fluid blocked by the blocking component 23 flows in the second sub-channel 2211b in the direction away from the blocking component 23, the fluid flows in the second sub-channel 2211b in the circumferential direction of the accommodating space 21 and substantially surrounds the accommodating space 21 again for one round, then reaches the second end of the blocking component 23, and then is output to the external environment from the outlet 223.

The blocking component 23 may be detachably connected to an inner wall of the frame 22, or may be integrally provided on the inner wall of the frame 22. The blocking component 23 may be directly connected to the inner wall of the frame 22, or may be limited to the inner wall of the frame 22 by another component. As an example, a connection mode of the blocking component 23 and the inner wall of the frame 22 may be, but is not limited to, bolt connection, welding, riveting, clamping, bonding, or the like.

Optionally, the blocking component 23 may be, but is not limited to, a plate-shaped structure, a block-shaped structure, a columnar structure, a film-shaped structure, or the like.

Optionally, the blocking component 23 may be made of, but is not limited to, a metal or non-metal material, for example, the metal material may be copper, a copper alloy, aluminum, an aluminum alloy, nickel, a nickel alloy, titanium, a titanium alloy, stainless steel, or the like, and the non-metal material may be ceramic, polyethylene, polypropylene, polyvinyl chloride, polyimide, polyamide, or the like.

In some examples, the blocking component 23 and the frame 22 are made of the same material, which can simplify the preparation process and is beneficial to reducing the cost.

Optionally, the shape of the inlet 222 may be, but is not limited to, a circle, a rectangle, an ellipse, a triangle, a trapezoid, or the like, and the shape of the outlet 223 may be, but is not limited to, a circle, a rectangle, an ellipse, a triangle, a trapezoid, or the like, which may be selected according to an actual application environment.

Optionally, one or more inlets 222 may be provided, and one or more outlets 223 may be provided, which may be selected according to the actual application environment.

When an abnormality occurs in the battery device 2, the fluid generated inside the battery device 2 can enter the channel 221 through the inlet 222, flow through the channel 221 to the outlet 223, and then be discharged to the outside of the battery device 2 through the outlet 223. The fluid may be a gas or a liquid.

In some examples, when the battery cell 10 in the battery device 2 experiences thermal runaway, a large amount of high-temperature gas may exist in the accommodating space 21 of the battery device 2, and the high-temperature gas may also be doped with impurities such as metal particles.

In some examples, when electrolyte leakage occurs in the battery cell 10 of the battery device 2, a large amount of electrolyte may exist in the accommodating space 21 of the battery device 2, and the electrolyte may also be doped with impurities such as metal particles.

It should be noted that when the battery cell 10 in the battery device 2 experiences thermal runaway, a large amount of high-temperature gas is generated, and the electrolyte is also likely to leak.

The blocking component 23 in the above technical solution can block the flow of the fluid, and can provide a flow path substantially surrounding the accommodating space 21 for the fluid flowing from the inlet 222 to the outlet 223, thereby extending the flow path and time of the fluid in the channel 221. Thus, the own temperature of the fluid can be effectively reduced in the channel 221, and at the same time, impurities such as metal particles doped in the fluid can be better precipitated in the channel 221, thereby reducing the risk of damage to other components located outside the battery device 2 and the risk of great pollution to the environment after the fluid is discharged to the outside of the battery device 2. In this way, it is possible to effectively reduce the impact on the external environment when an abnormality occurs in the battery device 2.

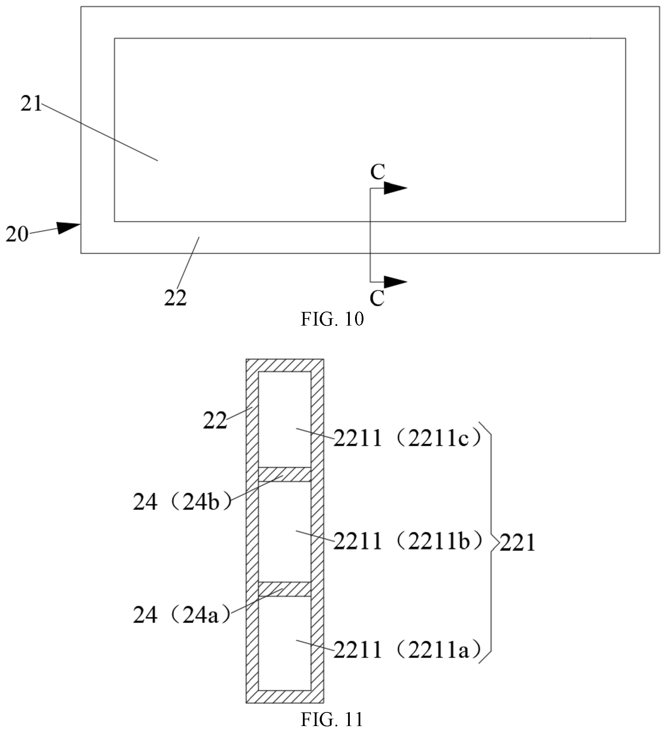

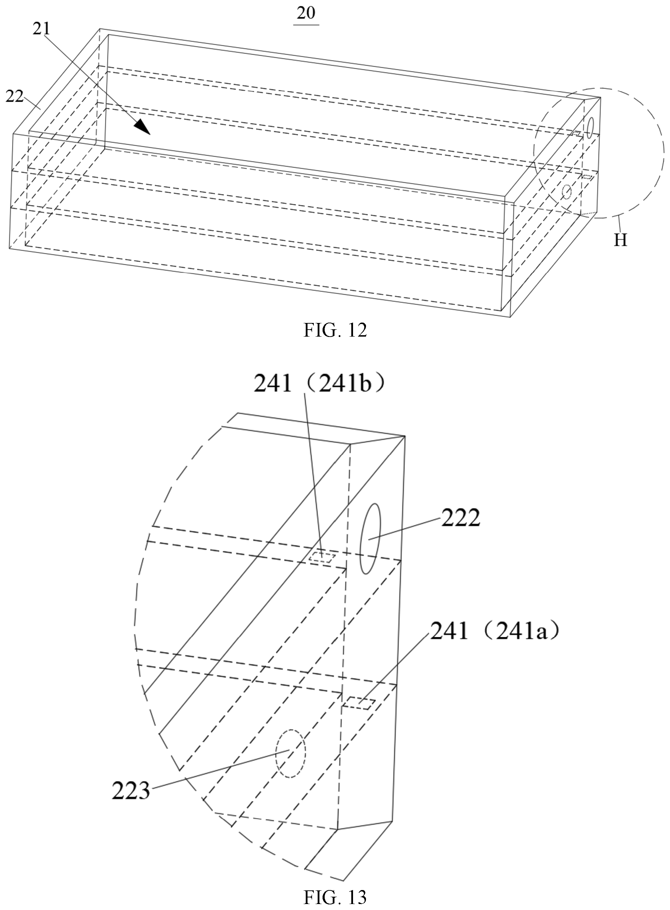

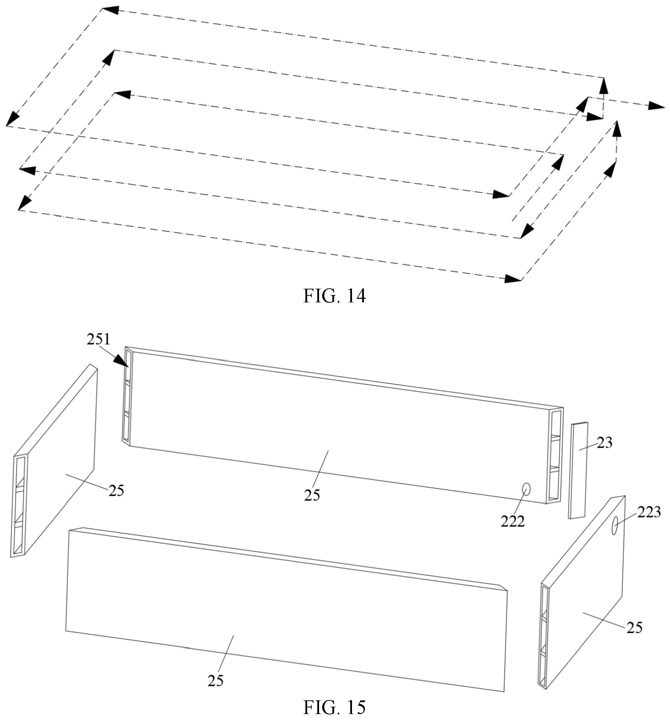

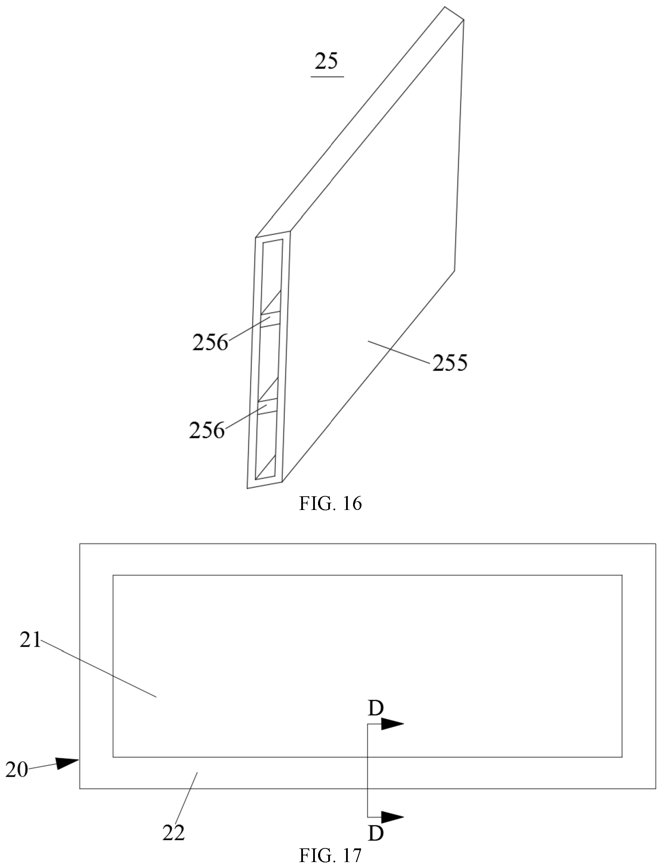

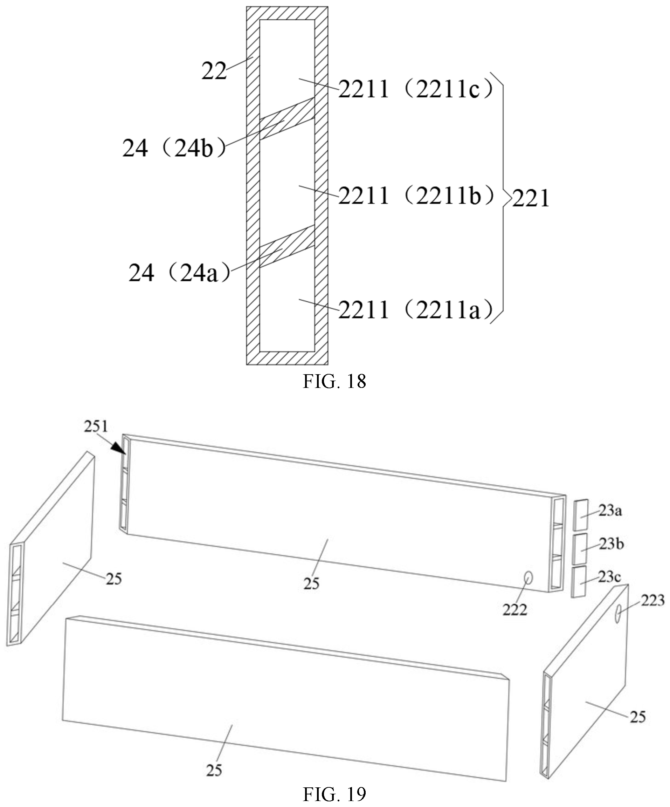

FIG. 10 is a schematic top view of another case 20 according to some embodiments of the present application; FIG. 11 is a schematic cross-sectional view along a line C-C in FIG. 10; FIG. 12 is a schematic perspective cutaway view of another case 20 according to some embodiments of the present application; FIG. 13 is a schematic partial enlarged view of A in FIG. 12; FIG. 14 is a schematic flow diagram of a fluid in the case 20 shown in FIG. 12; FIG. 15 is a schematic exploded view of another case 20 according to some embodiments of the present application; FIG. 16 is a schematic perspective view of a beam body 25 of the case 20 shown in FIG. 15; FIG. 17 is a schematic top view of yet another case 20 according to some embodiments of the present application; and FIG. 18 is a schematic cross-sectional view along a line D-D in FIG. 17.

Continuously referring to FIGS. 10 to 18, in some embodiments, the case 20 further includes a separating component 24, the separating component 24 is provided in the channel 221 and separates the channel 221 into N layers of sub-channels 2211 in a direction intersecting with an extension direction of the channel 221, the inlet 222 and the outlet 223 are respectively provided corresponding to the sub-channels 2211 of different layers, and N is greater than or equal to 2. A communication hole 241 is provided in the separating component 24, and two adjacent layers of sub-channels 2211 are communicated with each other through the communication hole 241.

The separating component 24 can separate the channel 221 into N sub-channels 2211 in a direction intersecting with the extension direction of the channel 221, where N may be, but is not limited to, 2, 3, 4, 5, 6, or the like. The case 20 may include N-1 separating components 24, and the N-1 separating components 24 are spaced apart in a direction intersecting the extension direction of the channel 221, to separate the channel 221 into N sub-channels 2211 in the direction intersecting the extension direction of the channel 221.

Hereinafter, an example in which the separating component 24 can separate the channel 221 into two layers of sub-channels 2211 in a direction intersecting the extension direction of the channel 221 will be described.

Exemplarily, the separating component 24 separates the channel 221 into a first sub-channel 2211a and a second sub-channel 2211b stacked in a direction intersecting the extension direction of the channel 221, the first sub-channel 2211a and the second sub-channel 2211b both surround the outer periphery of the accommodating space 21, and the first sub-channel 2211a and the second sub-channel 2211b are communicated through the communication hole 241. After entering the first sub-channel 2211a from the inlet 222, the fluid blocked by the blocking component 23 flows in the first sub-channel 2211a in a direction away from the blocking component 23, the fluid flows in the first sub-channel 2211a in the circumferential direction of the accommodating space 21 to reach the position of the first hole 241a, and then enters the second sub-channel 2211b through the communication hole 241, and the fluid flows in the second sub-channel 2211b in the circumferential direction of the accommodating space 21 to reach the blocking component 23, and then is output to the external environment from the outlet 223.

The separating component 24 may be detachably connected to the inner wall of the frame 22, or may be integrally provided on the inner wall of the frame 22. The separating component 24 may be directly connected to the inner wall of the frame 22 or may be restrained to the inner wall of the frame 22 by another component. As an example, the connection mode between the separating component 24 and the inner wall of the frame 22 may be, but is not limited to, bolt connection, welding, riveting, clamping, bonding, or the like.

Optionally, the separating component 24 may be, but is not limited to, a plate-like structure, a block-like structure, a columnar structure, a film-like structure, or the like.

Optionally, the separating component 24 may be made of, but not limited to, a metal or non-metal material, for example, the metal material may be copper, a copper alloy, aluminum, an aluminum alloy, nickel, a nickel alloy, titanium, a titanium alloy or stainless steel, and the non-metal material may be ceramic, polyethylene, polypropylene, polyvinyl chloride, polyimide or polyamide, or the like.

In some examples, the separating component 24 and the frame 22 are made of the same material, which can simplify the preparation process and is beneficial to reducing the cost.

Optionally, the shape of the communication hole 241 may be, but is not limited to, a circle, a rectangle, an ellipse, a triangle, a trapezoid, or the like, and may be selected according to an actual application environment.

Optionally, one or more communication holes 241 may be provided, which may be selected according to an actual application environment.

In the above technical solution, by providing the separating component 24, the flow path and time of the fluid in the channel 221 can be further extended, so that the impact on the external environment when an abnormality occurs in the battery device 2 can be further reduced.

In some embodiments, the separating component 24 separates the channel 221 into N sub-channels 2211 in a direction perpendicular to the extension direction of the channel 221.

In some embodiments, the cross-sectional shape of the sub-channel 2211 in the direction perpendicular to the extension direction of the channel 221 may be, but is not limited to, a rectangle, a square, a parallelogram, a triangle, a circle, or the like.

In some embodiments, the flow path substantially surrounds the accommodating space 21 N times.

In other words, the communication hole 241 is provided close to the blocking component 23. An example in which the above separating component 24 can divide the channel 221 into two layers of sub-channels 2211 in the direction intersecting the extension direction of the channel 221 will be described.

Exemplarily, the separating component 24 separates the channel 221 into a first sub-channel 2211a and a second sub-channel 2211b stacked in a direction intersecting the extension direction of the channel 221, the first sub-channel 2211a and the second sub-channel 2211b both surround the outer periphery of the accommodating space 21, and the first sub-channel 2211a and the second sub-channel 2211b are communicated through the communication hole 241. After entering the first sub-channel 2211a from the inlet 222, the fluid blocked by the blocking component 23 flows in the first sub-channel 2211a in a direction away from the blocking component 23, the fluid flows in the first sub-channel 2211a in the circumferential direction of the accommodating space 21 and substantially surrounds the accommodating space 21 for one round to reach the blocking component 23, and then enters the second sub-channel 2211b from the communication hole 241, the fluid blocked by the blocking component 23 flows in the second sub-channel 2211b in the direction away from the blocking component 23, and the fluid flows in the second sub-channel 2211b in the circumferential direction of the accommodating space 21 and substantially surrounds the accommodating space 21 again for one round to reach the blocking component 23, and then is output to the external environment from the outlet 223.

In this way, the above technical solution can further extend the flow path and time of the fluid in the channel 221, thereby further reducing the impact on the external environment when an abnormality of the battery device 2 occurs.

In some embodiments, the separating component 24 includes a first separating member 24a and a second separating member 24b, the first separating member 24a and the second separating member 24b are spaced apart in a direction intersecting the extension direction of the channel 221, and separate the channel 221 into a first sub-channel 2211a, a second sub-channel 2211b and a third sub-channel 2211c stacked in a direction intersecting the extension direction of the channel 221, and the second sub-channel 2211b is located between the first sub-channel 2211a and the third sub-channel 2211c. The communication hole 241 includes a first hole 241a and a second hole 241b, the first hole 241a is provided in the first separating member 24a, the first sub-channel 2211a and the second sub-channel 2211b are communicated through the first hole 241a, the second hole 241b is provided in the second separating member 24b, and the second sub-channel 2211b and the third sub-channel 2211c are communicated through the second hole 241b. The inlet 222 is provided corresponding to one of the first sub-channel 2211a and the third sub-channel 2211c, and the outlet 223 is provided corresponding to the other one of the first sub-channel 2211a and the third sub-channel 2211c.

The inlet 222 is provided corresponding to one of the first sub-channel 2211a and the third sub-channel 2211c, which may be understood as follows: the inlet 222 is directly communicated with one of the first sub-channel 2211a and the third sub-channel 2211c, that is, the inlet 222 is provided on the frame 22 surrounding one of the first sub-channel 2211a and the third sub-channel 2211c. The outlet 223 is provided corresponding to the other one of the first sub-channel 2211a and the third sub-channel 2211c, which may be understood as follows: the outlet 223 is directly communicated with the other one of the first sub-channel 2211a and the third sub-channel 2211c, that is, the outlet 223 is provided on the frame 22 surrounding the other one of the first sub-channel 2211a and the third sub-channel 2211c.

In some examples, the inlet 222 is provided corresponding to the first sub-channel 2211a, and the outlet 223 is provided corresponding to the third sub-channel 2211c.

In some examples, the inlet 222 is provided corresponding to the third sub-channel 2211c, and the outlet 223 is provided corresponding to the third sub-channel 2211.

Exemplarily, taking the arrangement where the inlet 222 is provided corresponding to the first sub-channel 2211a and the outlet 223 is provided corresponding to the third sub-channel 2211c as an example for illustration. The first sub-channel 2211a, the second sub-channel 2211b, and the third sub-channel 2211c all surround the outer periphery of the accommodating space 21. After entering the first sub-channel 2211a from the inlet 222, the fluid blocked by the blocking component 23 flows in the first sub-channel 2211a in a direction away from the blocking component 23, the fluid flows in the first sub-channel 2211a in the circumferential direction of the accommodating space 21 to reach the position of the first hole 241a, and then enters the second sub-channel 2211b through the first hole 241a, the fluid flows in the second sub-channel 2211b in the circumferential direction of the accommodating space 21 to reach the position of the second hole 241b, and then enters the third sub-channel 2211c through the second hole 241b, and the fluid flows in the third sub-channel 2211c in the circumferential direction of the accommodating space 21 to reach the blocking component 23, and then is output to the external environment from the outlet 223.

Optionally, the first separating member 24a and the second separating member 24b may have the same structural shape, or may have different structural shapes. The first separating member 24a and the second separating member 24b may be made of the same material or may be made of different materials.

Optionally, the first hole 241a and the second hole 241b may have the same shape or different shapes.

In the above technical solution, the channel 221 is provided to have a three -layer structure including the first sub-channel 2211a, the second sub-channel 2211b, and the third sub-channel 2211c, so that a flow path of the fluid in the channel 221 can be further extended, and the impact on the external environment when an abnormality occurs in the battery device 2 can be further reduced.

In some embodiments, the first separating member 24a and the second separating member 24b are spaced apart along the height of the case 20, the first sub-channel 2211a is located at the bottom of the case 20, and the third sub-channel 2211c is located at the top of the case 20. The inlet 222 is provided corresponding to the first sub-channel 2211a, and the outlet 223 is provided corresponding to the third sub-channel 2211c.

When the fluid enters the second sub-channel 2211b from the first sub-channel 2211a, since the second sub-channel 2211b is located at the top of the first sub-channel 2211a, some impurities such as metal particles doped in the fluid will fall into the first sub-channel 2211a under the action of gravity, so as to reduce the content of impurities such as metal particles in the fluid entering the second sub-channel 2211b. When the fluid enters the third sub-channel 2211c from the second sub-channel 2211b, since the third sub-channel 2211c is located at the top of the second sub-channel 2211b, some impurities such as metal particles doped in the fluid will further fall into the second sub-channel 2211b under the action of gravity, so as to reduce the content of impurities such as metal particles in the fluid entering the third sub-channel 2211c.

In this way, the above technical solution can effectively reduce the content of impurities such as metal particles in the fluid discharged to the outside of the battery device 2, thereby further reducing the impact on the external environment.

In some embodiments, the first hole 241a and the second hole 241b are both provided close to the blocking component 23, the inlet 222 is provided corresponding to the first sub-channel 2211a, and the outlet 223 is provided corresponding to the third sub-channel 2211c. The inlet 222 and the first hole 241a are respectively located on two opposite sides of the blocking component 23 in the extension direction of the first sub-channel 2211a, the first hole 241a and the second hole 241b are respectively located on two opposite sides of the blocking component 23 in the extension direction of the second sub-channel 2211b, and the second hole 241b and the outlet 223 are respectively located on two opposite sides of the blocking component 23 in the extension direction of the third sub-channel 2211c.

Exemplarily, after the fluid enters the first sub-channel 2211a from the inlet 222, the fluid blocked by the blocking component 23 flows in the first sub-channel 2211a in a direction away from the blocking component 23, and the fluid flows in the first sub-channel 2211a in the circumferential direction of the accommodating space 21 and reaches the blocking component 23 after substantially surrounding the accommodating space 21 for one round, and then enters the second sub-channel 2211b from the first hole 241a. The fluid blocked by the blocking component 23 flows in the second sub-channel 2211b in a direction away from the blocking component 23, and the fluid flows in the second sub-channel 2211b in the circumferential direction of the accommodating space 21 and reaches the blocking component 23 after substantially surrounds the accommodating space 21 for the second round for the second time, and then enters the third sub-channel 2211c from the second hole 241b; and the fluid blocked by blocking component 23 flows in the third sub-channel 2211c in a direction away from the blocking component 23, and the fluid flows in the third sub-channel 2211c in the circumferential direction of the accommodating space 21 and reaches the blocking component 23 after substantially surrounds the accommodating space 21 for one round for a third time, and then is output from the outlet 223 to the external environment.

In the above technical solution, by providing both the first hole 241a and the second hole 241b close to the blocking component 23, the flow path of the fluid in the channel 221 can be further extended, thereby further reducing the impact on the external environment when an abnormality occurs in the battery device 2.

FIG. 19 is a schematic exploded view of another case 20 according to some embodiments of the present application.

Continuously referring to FIG. 19, in some embodiments, the blocking component 23 includes a first blocking member 23a, a second blocking member 23b, and a third blocking member 23c, and the first blocking member 23a is provided in the first sub-channel 2211a and separates the first sub-channel 2211a in an extension direction of the first sub-channel 2211a. The second blocking member 23b is provided in the second sub-channel 2211b and separates the second sub-channel 2211b in an extension direction of the second sub-channel 2211b. The third blocking member 23c is provided in the third sub-channel 2211c and separates the third sub-channel 2211c in an extension direction of the third sub-channel 2211c.

Exemplarily, after entering the first sub-channel 2211a from the inlet 222, the fluid blocked by one side of the first blocking member 23a flows in the first sub-channel 2211a in a direction away from the first blocking member 23a, and the fluid flows in the first sub-channel 2211a in the circumferential direction of the accommodating space 21 and reaches the other side of the first blocking member 23a after substantially surrounding the accommodating space 21 for one round, and then enters the second sub-channel 2211b from the first hole 241a; the fluid blocked by one side of the second blocking member 23b flows in the second sub-channel 2211b in a direction away from the second blocking member 23b, and the fluid flows in the second sub-channel 2211b in the circumferential direction of the accommodating space 21 and reaches the other side of the second blocking member 23b after substantially surrounding the accommodating space 21 for one round for the second time, and then enters the third sub-channel 2211c from the second hole 241b; and the fluid blocked by one side of the third blocking member 23c flows in the third sub-channel 2211c in a direction away from the third blocking member 23c, and the fluid flows in the third sub-channel 2211c in the circumferential direction of the accommodating space 21 and reaches the other side of the third blocking member 23c after substantially surrounding the accommodating space 21 for one round for the third time, and is output from the outlet 223 to the external environment.

Optionally, the first blocking member 23a, the second blocking member 23b, and the third blocking member 23c may have the same structural shape, or may have different structural shapes. The first blocking member 23a, the second blocking member 23b, and the third blocking member 23c may be made of the same material, or may be made of different materials.

In the above technical solution, the blocking component 23 is provided as a split structure including the first blocking member 23a, the second blocking member 23b and the third blocking member 23c, and the structures or positions of the first blocking member 23a, the second blocking member 23b and the third blocking member 23c can be flexibly adjusted according to different requirements, thereby improving the flexibility and applicability of the arrangement of the blocking component 23.

In some embodiments, in a stacking direction of the first sub-channel 2211a, the second sub-channel 2211b, and the third sub-channel 2211c, the first blocking member 23a, the second blocking member 23b, and the third blocking member 23c at least partially overlap. Thus, the positions of the first blocking member 23a, the second blocking member 23b, and the third blocking member 23c on the case 20 are substantially the same, thereby reducing the structural complexity and facilitating maintenance.

In some embodiments, the first blocking member 23a, the second blocking member 23b, and the third blocking member 23c are integrally formed.

On the one hand, the first blocking member 23a, the second blocking member 23b, and the third blocking member 23c do not need to be connected by an additional connecting process, which simplifies the manufacturing process. Meanwhile, compared with a case where the first blocking member 23a, the second blocking member 23b and the third blocking member 23c are connected by an additional connecting process, the first blocking member 23a, the second blocking member 23b and the third blocking member 23c in an integrated structure have higher connection firmness.

In some embodiments, an opening area of the communication hole 241 is 50 mm² to 3000 mm².

As an example, the opening area of the communication hole 241 may be, but is not limited to, 50 mm², 100 mm², 200 mm², 300 mm², 400 mm², 500 mm², 600 mm², 700 mm², 800 mm², 900 mm², 1000 mm², 1500 mm², 2000 mm², 2500 mm², 3000 mm², or the like.

The larger the opening area of the communication hole 241 is, the faster the fluid flows from one layer of sub-channels 2211 to the other layer of sub-channels 2211 in the multi-layer sub-channels 2211, the shorter the time for the fluid to flow in the channel 221 is, and the worse the improvement effect of the fluid is. At the same time, the risk of excessive pressure in the frame 22 due to fluid gathered in the channel 221 is also lower. The smaller the opening area of the communication hole 241 is, the slower the speed of the fluid flowing from one layer of the sub-channels 2211 to another layer of the sub-channels 2211 in the multi-layer sub-channel 2211 is, the longer the time of the fluid flowing in the channel 221 is, and the better the improvement effect of the fluid is. At the same time, the risk of excessive pressure in the frame 22 due to fluid gathered in the channel 221 is also larger.

In this way, in the above technical solution, by setting the opening area of the communication hole 241 within the above range, the overall flow time of the fluid in the channel 221 can be within an appropriate range, thereby reducing the impact on the external environment when an abnormality occurs in the battery device 2, and reducing the risk of excessive pressure generated inside the frame 22.

In some embodiments, the opening area of the communication hole 241 is 200 mm² to 1,300 mm². The effect of reducing the impact on the external environment when an abnormality occurs in the battery device 2 and reducing the risk of excessive pressure generated inside the frame 22 can be further improved.

As an example, the opening area of the communication hole 241 may be, but is not limited to, 200 mm², 250 mm², 300 mm², 350 mm², 400 mm², 450 mm², 500 mm², 550 mm², 600 mm², 650 mm², 700 mm², 750 mm², 800 mm², 850 mm², 900 mm², 950 mm², 1000 mm², 1100 mm², 1200mm², 1300 mm², or the like.

In some embodiments, the area of the cross section of the sub-channel 2211 perpendicular to the extension direction of the sub-channel 2211 is 50 mm² to 3,000 mm².

As an example, the area of the cross section of the sub-channel 2211 perpendicular to the extension direction of the sub-channel 2211 may be, but is not limited to, 50 mm², 100 mm², 200 mm², 300 mm², 400 mm², 500 mm², 600 mm², 700 mm², 800 mm², 900 mm², 1,000 mm², 1,500 mm², 2,000 mm², 2,500 mm², 3,000 mm², or the like.

The larger the area of the cross section of the sub-channel 2211 perpendicular to the extension direction of the sub-channel 2211 is, the faster the fluid flows from one layer of the sub-channels 2211 to another layer of the sub-channels 2211 in the multi-layer sub-channel 2211, the shorter the time for the fluid to flow in the channel 221 is, and the worse the improvement effect of the fluid is. At the same time, the risk of excessive pressure in the frame 22 due to fluid gathered in the channel 221 is also lower. The smaller the area of the cross section of the sub-channel 2211 perpendicular to the extension direction of the sub-channel 2211 is, the slower the speed of the fluid flowing from one layer of the sub-channels 2211 to another layer of the sub-channels 2211 in the multi-layer sub-channel 2211 is, the longer the time of the fluid flowing in the channel 221 is, and the better the improvement effect of the fluid is. At the same time, the risk of excessive pressure in the frame 22 due to fluid gathered in the channel 221 is also larger.

In this way, in the above technical solution, the area of the cross section of the sub-channel 2211 perpendicular to the extension direction of the sub-channel 2211 is set within the above range, so that the overall flow time of the fluid in the channel 221 can be within an appropriate range, thereby reducing the impact on the external environment when an abnormality occurs in the battery device 2, and reducing the risk of excessive pressure generated inside the frame 22.

In some embodiments, the area of the cross section of the sub-channel 2211 perpendicular to the extension direction of the sub-channel 2211 is 200 mm² to 1,300 mm². The effect of reducing the impact on the external environment when an abnormality occurs in the battery device 2 and reducing the risk of excessive pressure generated inside the frame 22 can be further improved.

As an example, the area of the cross section of the sub-channel 2211 perpendicular to the extension direction of the sub-channel 2211 may be, but is not limited to, 200 mm², 250 mm², 300 mm², 350 mm², 400 mm², 450 mm², 500 mm², 550 mm², 600 mm², 650 mm², 700 mm², 750 mm², 800 mm², 850 mm², 900 mm², 950 mm², 1,000 mm², 1,100 mm², 1,200 mm², 1,300 mm², or the like.

Continuously in conjunction with FIG. 8 and FIG. 9, in some embodiments, the frame 22 includes M beam bodies 25, the M beam bodies 25 are provided along an outer periphery of the accommodating space 21 and are connected to each other end to end, a cavity 251 is formed inside each of the beam bodies 25, and the cavities 251 of the M beam bodies 25 are connected to each other to form a channel 221, where M is greater than or equal to 2. The blocking component 23 is provided at a position where the first beam body 25 and the M^{th} beam body 25 are connected to each other, and separates the cavity 251 of the first beam body 25 and the cavity 251 of the M^{th} beam body 25 at the position where the first beam body 25 and the M^{th} beam body 25 are connected to each other. The inlet 222 is provided on the first beam body 25, and the outlet 223 is provided on the M^{th} beam body 25.

Exemplarily, the M beam bodies 25 are provided along the outer periphery of the accommodating space 21 and connected to each other end to end, which may be understood as follows: the M beam bodies 25 are sequentially arranged along the outer periphery of the accommodating space 21 and in one direction. The one direction may be a clockwise direction or a counterclockwise direction.

The M beam bodies 25 may be directly connected to each other or may be indirectly connected to each other via another component. As an example, the connection mode between the M beam bodies 25 may be, but is not limited to, bolt connection, welding, riveting, clamping, bonding, or the like. M may be, but is not limited to, 2, 3, 4, 5, 6, or the like.

Optionally, the M beam bodies 25 may have a same structure or a different structure. The M beam bodies 25 may be made of the same material, or different materials.

In some examples, the M beam bodies 25 are made of the same material, which can simplify the preparation process and is beneficial to reducing the cost.

In some examples, the frame 22 includes four beam bodies 25, and the four beam bodies 25 are provided along the outer periphery of the accommodating space 21 to form a rectangular frame 22.

The first beam body 25 and the M^{th} beam body 25 are adjacent to each other, and the blocking component 23 is provided at a position where the first beam body 25 and the M^{th} beam body 25 are connected to each other, in other words, the stopping component 23 is connected between the first beam body 25 and the M^{th} beam 25 body. The blocking component 23 may be directly connected between the first beam body 25 and the M^{th} beam body 25, or the blocking component 23 may be restrained by another component so as to be connected between the first beam body 25 and the M^{th} beam body 25.

In the above technical solution, the frame 22 is formed by providing the M beam bodies 25, which is beneficial to reducing the assembly difficulty of the blocking component 23, thereby reducing the production cost.

In some embodiments, the frame 22 includes M beam bodies 25, the M beam bodies 25 are provided along the outer periphery of the accommodating space 21 and connected to each other end to end, a cavity 251 is formed inside each of the beam bodies 25, and the cavities 251 of the M beam bodies 25 are connected to each other to form a channel 221, where M is greater than or equal to 2. The blocking component 23 is provided at a position where the first beam body 25 and the M^{th} beam body 25 are connected to each other, and separates the cavity 251 of the first beam body 25 and the cavity 251 of the M^{th} beam body 25 at the position where the first beam body 25 and the M^{th} beam body 25 are connected to each other. When the number N of layers of the sub-channels 2211 is an even number, the inlet 222 and the outlet 223 are provided on the first beam body 25. When the number N of layers of the sub-channels 2211 is an odd number, the inlet 222 is provided on the first beam body 25, and the outlet 223 is provided on the M^{th} beam body 25.

Such an arrangement can extend the flow path and time of the fluid in the channel 221 to the maximum extent in a case where the number of layers of the sub-channels 2211 is constant.

In some embodiments, each of the beam bodies 25 includes two end faces 254 that are opposite to each other in a length direction of the beam body, and the M beam bodies 25 are connected to each other end to end via the end faces 254.

Exemplarily, the cavity 251 extends in the length direction of the beam body 25, and the two end surfaces 254 of the beam body 25 refer to the end surfaces 254 of the beam body 25 having the opening of the cavity 251.

In the above technical solution, the M beam bodies 25 are directly connected by using the end face 254, which not only can improve the assembly efficiency, but also helps reduce the overall structural complexity of the battery device 2.

In some embodiments, the beam body 25 includes a first surface 252 and a second surface 253 that are opposite to each other in a thickness direction of the beam body, and each end surface 254 connects the first surface 252 and the second surface 253. The size of the first surface 252 in the length direction is smaller than the size of the second surface 253 in the length direction.

Exemplarily, the first surface 252 is a side surface of the beam body 25 facing the accommodating space 21, and the second surface 253 is a side surface of the beam body 25 facing away from the accommodating space 21.

The above technical solution can make the two end surfaces 254 of the beam body 25 facing away from each other in the length direction of the beam body inclined, which can reduce the operation difficulty of direct connection between the plurality of beam bodies 25 and help to improve the production efficiency.

Continuously in conjunction with FIG. 15 and FIG. 16, in some embodiments, each of the beam bodies 25 includes a beam main body 255 and N-1 first reinforcing ribs 256, the cavity 251 is provided in the beam main body 255, and the N-1 first reinforcing ribs 256 are provided in the cavity 251. The first reinforcing ribs 256 of every two adjacent beam bodies 25 are butted and connected to form N-1 separating components 24, and the N-1 separating components 24 separate the channel 221 into N sub-channels 2211 in a direction intersecting the extension direction of the channel 221. The first reinforcing rib 256 of at least one of the first beam body 25 and the M^{th} beam body 25 is provided with a communication hole 241. In the sub-channel 2211 provided with the inlet 222 or the outlet 223, the communication hole 241 is located at an end of the sub-channel 2211 away from the inlet 222 or the outlet 223.

Exemplarily, the first reinforcing ribs 256 of the plurality of beam bodies 25 being butt-connected means that after the first reinforcing ribs 256 of the plurality of beam bodies 25 are connected, there is no gap between the first reinforcing ribs 256 of two adjacent beam bodies 25, so that each layer of the sub-channels 2211 in the N layers of the sub-channels 2211 are not connected at the connection of the plurality of first reinforcing ribs 256.

The first reinforcing rib 256 may be detachably connected to the inner wall of the beam main body 255, or may be integrally provided on the inner wall of the beam main body 255. The first reinforcing rib 256 may be directly connected to the inner wall of the beam main body 255 or may be restrained to the inner wall of the beam main body 255 by another component. As an example, the connection mode of the first reinforcing rib 256 and the inner wall of the beam main body 255 may be, but is not limited to, bolt connection, welding, riveting, clamping, bonding, or the like.

Optionally, the first reinforcing rib 256 may be, but is not limited to, a plate-shaped structure, a block-shaped structure, a columnar structure, a film-shaped structure, or the like.

Optionally, the first reinforcing rib 256 may be made of, but is not limited to, a metal or non-metal material, for example, the metal material may be copper, a copper alloy, aluminum, an aluminum alloy, nickel, a nickel alloy, titanium, a titanium alloy, stainless steel, or the like, and the non-metal material may be ceramic, polyethylene, polypropylene, polyvinyl chloride, polyimide, polyamide, or the like.

In some examples, the beam main body 255 and the first reinforcing rib 256 are of an integrally formed structure. On the one hand, the beam main body 255 and the first reinforcing rib 256 do not need to be connected by an additional connection process, which simplifies the manufacturing process. Meanwhile, compared with a case where the beam main body 255 and the first reinforcing rib 256 are connected through an additional connection process, the beam main body 255 and the first reinforcing rib 256 in an integrated structure have higher connection firmness.

Optionally, one, two or more first reinforcing ribs 256 of each beam body 25 may be provided, and the number of the first reinforcing ribs 256 of each beam body 25 in the plurality of beams is the same.

The first reinforcing rib 256 of at least one of the first beam body 25 and the M^{th} beam body 25 is provided with the communication hole 241, which may be understood as follows: the first reinforcing rib 256 of one of the first beam body 25 and the M^{th} beam body 25 is provided with the communication hole 241, and the first reinforcing ribs 256 of the first beam body 25 and the M^{th} beam body 25 are each provided with the communication hole 241.

In the above technical solution, the first reinforcing ribs 256 of the plurality of beam bodies 25 are connected to form the separating component 24, which is beneficial to reducing the difficulty of manufacturing the frame 22 and reducing the production cost.

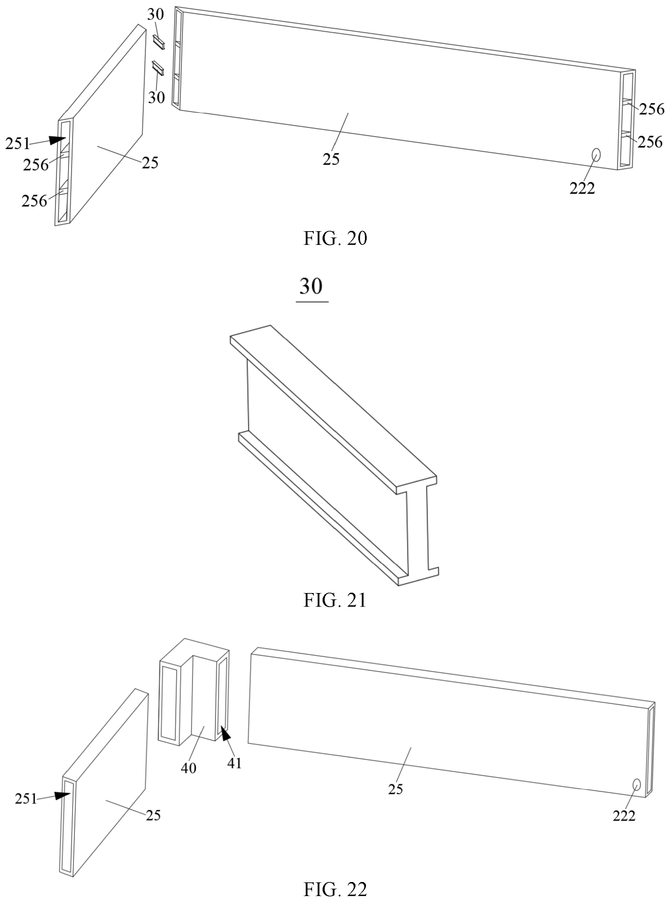

FIG. 20 is a schematic partial exploded view of another case 20 according to some embodiments of the present application; and FIG. 21 is a schematic perspective view of a first sealing member 30 according to some embodiments of the present application.

Continuously referring to FIGS. 20 and 21, in some embodiments, the case 20 further includes a first sealing member 30, and the first sealing member 30 is clamped between the first reinforcing ribs 256 of two adjacent beam bodies 25.

Exemplarily, in the process of connecting the M beam bodies 25, the first sealing member 30 is first connected to at least part of the first reinforcing ribs 256, and then the beam main bodies 255 of the plurality of beam bodies 25 are connected, so that the first sealing member 30 is clamped between the first reinforcing ribs 256 of two adjacent beam bodies 25 to seal the gap between the first reinforcing ribs 256 of the two adjacent beam bodies 25.

The first sealing member 30 may be directly connected between the first reinforcing ribs 256 of the two adjacent beam bodies 25, or may be limited between the first reinforcing ribs 256 of the two adjacent beam bodies 25 by another component.

The number of the first sealing members 30 matches the number of the first reinforcing ribs 256. As an example, four beam bodies 25 are provided, each of the beam bodies 25 includes one first reinforcing rib 256, and four first sealing members 30 are provided. As another example, four beam bodies 25 are provided, each of the beam bodies 25 includes two first reinforcing ribs 256, and eight first sealing members 30 are provided.

Optionally, the first sealing member 30 may be, but is not limited to, a sealing gasket, a sealant, a sealing ring, or the like, which may be selected according to an actual application environment.

Optionally, the first sealing member 30 may be made of, but is not limited to, a material such as silicone rubber, fluororubber, polytetrafluoroethylene, epoxy resin, or polyurethane.

In the above technical solution, by providing the first sealing member 30, the first reinforcing ribs 256 of the two adjacent beam bodies 25 can be hermetically connected without welding, thereby reducing the overall difficulty of preparation, improving the production efficiency and reducing the cost.

In some embodiments, the first sealing member 30 includes a first positioning groove, and the first reinforcing rib 256 is clamped in the first positioning groove.

FIG. 22 is a schematic partial exploded view of another case 20 according to some embodiments of the present application.

Continuously referring to FIG. 22, in some embodiments, the case 20 further includes a plurality of connecting members 40, and the number of the connecting members 40 matches the number of the beam bodies 25. Every two adjacent beam bodies 25 are connected by a connecting member 40, a cavity 41 is provided inside the connecting member 40, and the cavities 251 of the plurality of beam bodies 25 are communicated through the cavity 41. The blocking component 23 is provided at a position where the first beam body 25 and the M^{th} beam body 25 are connected by the connecting member 40.

Exemplarily, the connecting member 40 may be directly connected to the beam body 25, or may be limited to the beam body 25 by using another component. As an example, the connecting mode of the connecting member 40 and the beam body 25 may be, but is not limited to, bolt connection, welding, riveting, clamping, bonding, or the like.

The number of the connecting members 40 matches the number of the beam bodies 25, and as an example, four beam bodies 25 are provided, and four connecting members 40 are provided.

In some examples, the connecting member 40 includes a first portion and a second portion connected to each other, the first portion is connected to one of the two adjacent beam bodies 25, the second portion is connected the other one of the two adjacent beam bodies 25, and the first portion and the second portion form a certain included angle, where the included angle may be an acute angle, a right angle or an obtuse angle.

In some examples, an included angle between the first portion and the second portion is a right angle.

Optionally, the connecting member 40 may be made of, but not limited to, a metal or non-metal material, for example, the metal material may be copper, a copper alloy, aluminum, an aluminum alloy, nickel, a nickel alloy, titanium, a titanium alloy, stainless steel, or the like, and the non-metal material may be ceramic, polyethylene, polypropylene, polyvinyl chloride, polyimide, polyamide, or the like.

In some examples, the connecting member 40 and the beam body 25 may be made of the same material, which helps simplify the preparation process and reduce the production cost.

The blocking component 23 is provided at a position where the first beam body 25 and the M^{th} beam body 25 are connected by the connecting member 40. It may be understood that the blocking component 23 is disposed between the first beam body 25 and the connecting member 40, or the blocking component 23 is disposed between the M^{th} beam body 25 and the connecting member 40, or the blocking component 23 is disposed in the cavity 41 of the connecting member 40.

In the above technical solution, the connecting member 40 is introduced to connect two adjacent beam bodies 25, which can effectively reduce the difficulty of connection between the plurality of beam bodies 25, so as to further improve the overall production efficiency of the battery device 2 and reduce the cost.

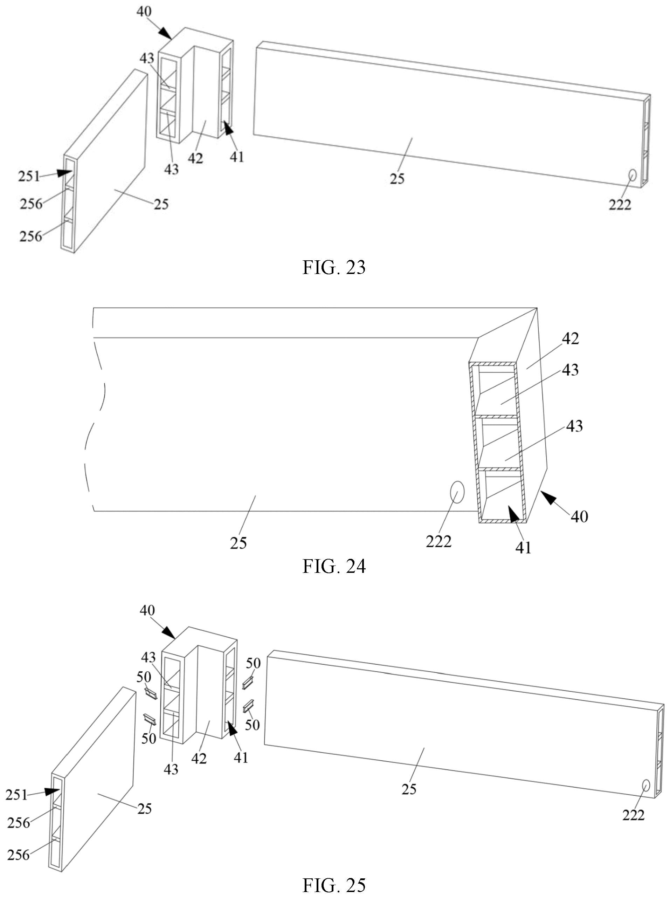

FIG. 23 is a schematic partial exploded view of another case 20 according to some embodiments of the present application; and FIG. 24 is a schematic perspective view of a beam body 25 and a connecting member 40 of a battery device 2 in cooperation, according to some embodiments of the present application.

Continuously referring to FIGS. 23 and 24, in some embodiments, the beam body 25 includes a beam main body 255 and N-1 first reinforcing ribs 256, the cavity 251 is provided in the beam main body 255, and the N-1 first reinforcing ribs 256 are provided in the cavity 251. The connecting member 40 includes a connecting body 42 and N-1 second reinforcing ribs 43, the connecting main body 42 is connected to the beam main bodies 255 of the two adjacent beam bodies 25, the cavity 41 is provided in the connecting main body 42, and the N-1 second reinforcing ribs 43 are provided in the cavity 41. Each of the second reinforcing ribs 43 is butt-connected to the first reinforcing ribs 256 of two adjacent beam bodies 25 to form N-1 separating components 24, and the N-1 separating components 24 separate the channel 221 into N sub-channels 2211 in a direction intersecting the extension direction of the channel 221. The first reinforcing rib 256 of at least one of the first beam body 25 and the M^{th} beam body 25 is provided with a communication hole 241. In the sub-channel 2211 provided with the inlet 222 or the outlet 223, the communication hole 241 is located at an end of the sub-channel 2211 away from the inlet 222 or the outlet 223.

Exemplarily, the second reinforcing rib 43 butt-connected to the first reinforcing ribs 256 of the two adjacent beam bodies 25 means that after the second reinforcing rib 43 is connected to the first reinforcing ribs 256 of the two adjacent beam bodies 25, there is no gap between the second reinforcing rib 43 and the first reinforcing rib 256, so that each layer of sub-channels 2211 in the N layers of sub-channels 2211 are not connected at the joint between the second reinforcing rib 43 and the first reinforcing rib 256.

The second reinforcing rib 43 may be detachably connected to the inner wall of the connecting main body 42, or may be integrally provided on the inner wall of the connecting main body 42. The second reinforcing rib 43 may be directly connected to the inner wall of the connecting main body 42, or may be limited to the inner wall of the connecting main body 42 by another component. As an example, the connection mode of the second reinforcing rib 43 and the inner wall of the connecting main body 42 may be, but is not limited to, bolt connection, welding, riveting, clamping, bonding, or the like.

Optionally, the second reinforcing rib 43 may be, but is not limited to, a plate-shaped structure, a block-shaped structure, a columnar structure, a film-shaped structure, or the like.

Optionally, the second reinforcing rib 43 may be made of, but not limited to, a metal or non-metal material, for example, the metal material may be copper, a copper alloy, aluminum, an aluminum alloy, nickel, a nickel alloy, titanium, a titanium alloy, stainless steel, or the like, and the non-metal material may be ceramic, polyethylene, polypropylene, polyvinyl chloride, polyimide, polyamide, or the like.

In some examples, the connecting main body 42 and the second reinforcing rib 43 are of an integrally formed structure. On the one hand, the connecting main body 42 and the second reinforcing rib 43 do not need to be connected by an additional connecting process, which simplifies the manufacturing process. Meanwhile, compared with a case where the connecting main body 42 and the second reinforcing rib 43 are connected by an additional connecting process, the connecting main body 42 and the second reinforcing rib 43 in an integrated structure have higher connection firmness.

Optionally, one, two or more second reinforcing ribs 43 in each connecting member 40 may be provided, and the number of the second reinforcing ribs 43 matches the number of the first reinforcing ribs 256. As an example, four beam bodies 25 are provided, each of the beam bodies 25 includes one first reinforcing rib 256, four connecting members 40 are provided, and each of the connecting members 40 includes one second reinforcing rib 43. As another example, four beam bodies 25 are provided, each of the beam bodies 25 includes two first reinforcing ribs 256, four connecting members 40 are provided, and each of the connecting members 40 includes two second reinforcing ribs 43.

In the above technical solution, the second reinforcing ribs 43 are provided to connect the first reinforcing ribs 256 of two adjacent beam bodies 25, which can further reduce the difficulty of connection between the first reinforcing ribs 256 of the plurality of beam bodies 25, so as to further improve the overall production efficiency of the battery device 2 and reduce the cost.

In addition, in the sub-channel 2211 provided with the inlet 222 or the outlet 223, the communication hole 241 is located at one end of the sub-channel 2211 away from the inlet 222 or the outlet 223, which can further extend the flow path of the fluid in the channel 221, thereby further reducing the impact on the external environment when an abnormality occurs in the battery device 2.

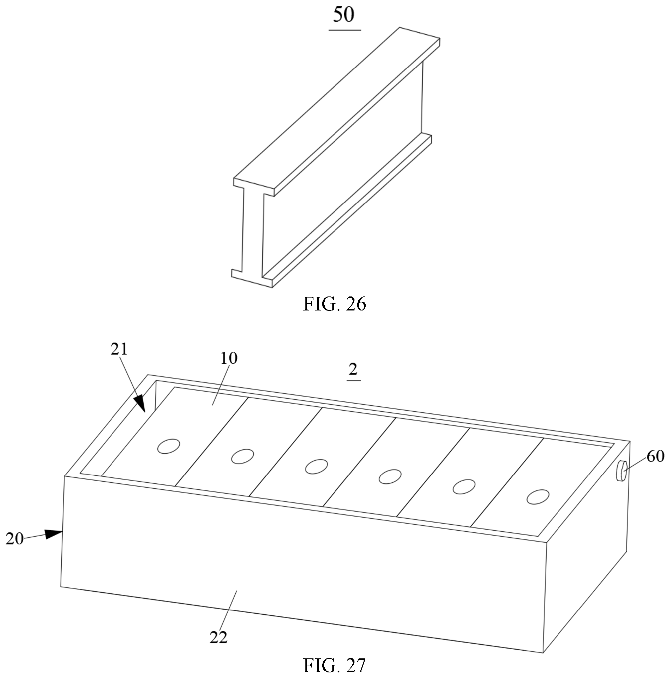

FIG. 25 is a schematic partial exploded view of another case 20 according to some embodiments of the present application; and FIG. 26 is a schematic perspective view of a second sealing member 50 according to some embodiments of the present application.

Continuously referring to FIGS. 25 and 26, in some embodiments, the case 20 further includes a second sealing member 50, and the second sealing member 50 is connected between the second reinforcing rib 43 and the first reinforcing rib 256.

Exemplarily, in the process of connecting the second reinforcing rib 43 with the first reinforcing rib 256, the second sealing member 50 is first connected to at least one of the second reinforcing rib 43 and the first reinforcing rib 256, and then the beam main body 255 of the beam body 25 is connected to the connecting main body 42 of the connecting member 40, so that the second sealing member 50 is clamped between the second reinforcing rib 43 and the first reinforcing rib 256 to seal the gap between the second reinforcing rib 43 and the first reinforcing rib 256.

The second sealing member 50 may be directly connected to the first reinforcing rib 256 between the second reinforcing rib 43 and the first reinforcing rib 256, or may be limited between the second reinforcing rib 43 and the first reinforcing rib 256 by another component.

The number of the second sealing members 50 matches the number of the first reinforcing ribs 256. As an example, four beam bodies 25 are provided, each of the beam bodies 25 includes one first reinforcing rib 256, and four second sealing members 50 are provided. As another example, four beam bodies 25 are provided, each of the beam bodies 25 includes two first reinforcing ribs 256, and eight second sealing members 50 are provided.

Optionally, the second sealing member 50 may be, but is not limited to, a sealing gasket, a sealant, a sealing ring, or the like, which may be selected according to an actual application environment.

Optionally, the second sealing member 50 may be made of, but not limited to, a material such as silicone rubber, fluororubber, polytetrafluoroethylene, epoxy resin, or polyurethane.

In the above technical solution, by providing the second sealing member 50, the second reinforcing rib 43 and the first reinforcing rib 256 can be hermetically connected without welding the second reinforcing rib and the first reinforcing rib, thereby reducing the overall difficulty of preparation, improving the production efficiency and reducing the cost.

In some embodiments, the second sealing member 50 includes a second positioning groove, and at least one of the first reinforcing rib 256 and the second reinforcing rib 43 is clamped in the second positioning groove.

FIG. 27 is a schematic perspective view of another battery device 2 according to some other embodiments of the present application.

Continuously referring to FIG. 27, in some embodiments, the battery device 2 further includes a pressure relief mechanism 60, and the pressure relief mechanism 60 is communicated with the outlet 223.

The pressure relief mechanism 60 is configured to relief the internal pressure when the internal pressure or temperature of the frame 22 reaches the threshold. Exemplarily, when the fluid in the channel 221 reaches the outlet 223, the fluid can apply pressure to the pressure relief mechanism 60, and when the pressure reaches a preset threshold, the pressure relief mechanism 60 is opened to enable the fluid in the channel 221 to be discharged to the outside of the battery device 2.

The pressure relief mechanism 60 may be detachably connected to the frame 22, or may be integrally provided on the frame 22. The pressure relief mechanism 60 may be directly connected to the frame 22, or may be limited to the frame 22 by another component. As an example, the connection mode of the pressure relief mechanism 60 and the frame 22 may be, but is not limited to, bolt connection, riveting, bonding, clamping, or the like.

In some examples, the pressure relief mechanism 60 and the frame 22 are of an integrated structure, the frame 22 is provided with a weak portion, a thickness of the weak portion is less than a thickness of other regions on the frame 22, and the pressure relief mechanism 60 is formed by the weak portion and a region surrounded by the weak portion.

In the above technical solution, the pressure relief mechanism 60 is provided at the outlet 223, so that the fluid in the channel 221 can be discharged to the outside of the battery device 2 only when reaching a certain condition, thereby reducing unnecessary discharge of the fluid, and further reducing the impact on the external environment.

According to some embodiments of the present application, the present application further provides an electric device, including the battery device 2 in any one of the above solutions, and the battery device 2 is configured to provide electric energy.

Unless otherwise specified, all implementations and optional implementations of the present application may be combined with each other to form new technical solutions. All technical features and optional technical features of the present application can be combined with each other to form new technical solutions.

To better understand the battery device 2 provided in the embodiments of the present application, based on a same inventive concept, the foregoing embodiments of the battery device 2 in actual application are provided herein for description.

The embodiment of the present application provides a battery device 2. The battery device 2 includes a battery cell 10 and a case 20, where the case 20 includes an accommodating space 21 and a frame 22, the battery cell 10 is accommodated in the accommodating space 21, the frame 22 is provided along an outer periphery of the accommodating space 21, a channel 221 is provided inside the frame 22, and the channel 221 surrounds the outer periphery of the accommodating space 21. The frame 22 is further provided with an inlet 222 and an outlet 223, the inlet 222 is connected to the accommodating space 21 and the channel 221, and the outlet 223 is connected to the channel 221 and the outside of the case 20. A blocking component 23 is further provided in the channel 221, and the blocking component 23 separates the channel 221 into a flow path connecting the inlet 222 and the outlet 223 and substantially surrounding the accommodating space 21.

The blocking component 23 in the above technical solution can block the flow of the fluid, and can provide a flow path substantially surrounding the accommodating space 21 for the fluid flowing from the inlet 222 to the outlet 223, thereby extending the flow path and time of the fluid in the channel 221. Thus, the own temperature of the fluid can be effectively reduced in the channel 221, and at the same time, impurities such as metal particles doped in the fluid can be better precipitated in the channel 221, thereby reducing the risk of damage to other components located outside the battery device 2 and the risk of great pollution to the environment after the fluid is discharged to the outside of the battery device 2. In this way, it is possible to effectively reduce the impact on the external environment when an abnormality occurs in the battery device 2.

It should be noted that, without contradictory, the embodiments in the present application may be combined with the features in the embodiments.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A battery device, comprising:
a battery cell;
a case, comprising an accommodating space and a frame, wherein the battery cell is accommodated in the accommodating space, the frame is provided along an outer periphery of the accommodating space, a channel is provided inside the frame, and the channel surrounds the outer periphery of the accommodating space;
wherein the frame is further provided with an inlet and an outlet, the inlet is connected to the accommodating space and the channel, and the outlet is connected to the channel and the outside of the case; and
a blocking component is further provided in the channel, and the blocking component separates the channel into a flow path connecting the inlet and the outlet and substantially surrounding the accommodating space.

2. The battery device according to claim 1, wherein the case further comprises a separating component, the separating component is provided in the channel and separates the channel into N layers of sub-channels in a direction intersecting an extension direction of the channel, the inlet and the outlet are respectively provided corresponding to different layers of the sub-channels, and N is greater than or equal to 2; and
the separating component is provided with a communication hole, and two adjacent layers of sub-channels are communicated through the communication hole.

3. The battery device according to claim 2, wherein the flow path substantially surrounds the accommodating space N times.

4. The battery device according to claim 2 or 3, wherein the separating component comprises a first separating member and a second separating member, the first separating member and the second separating member are spaced apart in a direction intersecting the extension direction of the channel, and divide the channel into a first sub-channel, a second sub-channel, and a third sub-channel that are stacked in the direction intersecting the extension direction of the channel, and the second sub-channel is located between the first sub-channel and the third sub-channel;
the communication hole comprises a first hole and a second hole, the first hole is provided in the first separating member, the first sub-channel and the second sub-channel are communicated through the first hole, the second hole is provided in the second separating member, and the second sub-channel and the third sub-channel are communicated through the second hole; and
the inlet is provided corresponding to one of the first sub-channel and the third sub-channel, and the outlet is provided corresponding to the other one of the first sub-channel and the third sub-channel.

5. The battery device according to claim 4, wherein the first separating member and the second separating member are spaced apart along a height of the case, the first sub-channel is located at a bottom of the case, and the third sub-channel is located at a top of the case; and
the inlet is provided corresponding to the first sub-channel, and the outlet is provided corresponding to the third sub-channel.

6. The battery device according to claim 4, wherein the first hole and the second hole are both formed close to the blocking component, the inlet is provided corresponding to the first sub-channel, and the outlet is provided corresponding to the third sub-channel; and
the inlet and the first hole are respectively located on two opposite sides of the blocking component in an extension direction of the first sub-channel, the first hole and the second hole are respectively located on two opposite sides of the blocking component in an extension direction of the second sub-channel, and the second hole and the outlet are respectively located on two opposite sides of the blocking component in an extension direction of the third sub-channel.

7. The battery device according to claim 6, wherein the blocking component comprises a first blocking member, a second blocking member, and a third blocking member, and the first blocking member is provided in the first sub-channel and separates the first sub-channel in the extension direction of the first sub-channel;
the second blocking member is provided in the second sub-channel and separates the second sub-channel in the extension direction of the second sub-channel; and
the third blocking member is provided in the third sub-channel and separates the third sub-channel in the extension direction of the third sub-channel.

8. The battery device according to claim 7, wherein in a stacking direction of the first sub-channel, the second sub-channel, and the third sub-channel, the first blocking member, the second blocking member, and the third blocking member at least partially overlap; or
the first blocking member, the second blocking member, and the third blocking member are integrally formed.

9. The battery device according to any one of claims 2 to 8, wherein an opening area of the communication hole is 50 mm² to 3,000 mm².

10. The battery device according to claim 9, wherein the opening area of the communication hole is 200 mm² to 1,300 mm².

11. The battery device according to any one of claims 2 to 8, wherein an area of a cross section of the sub-channel perpendicular to an extension direction of the sub-channel is 50 mm² to 3,000 mm².

12. The battery device according to claim 11, wherein the area of the cross section of the sub-channel perpendicular to the extension direction of the sub-channel is 200 mm² to 1,300 mm².

13. The battery device according to any one of claims 1 to 12, wherein the frame comprises M beam bodies, the M beam bodies are provided along the outer periphery of the accommodating space and are connected to each other end to end, a cavity is formed inside each of the beam bodies, the cavities of the M beam bodies are connected to each other to form the channel, and M is greater than or equal to 2;
the blocking component is provided at a position where a first beam body and an M^{th} beam body are connected, and separates a cavity of the first beam body and a cavity of the M^{th} beam body at the position where the first beam body and the M^{th} beam body are connected; and
the inlet is provided in the first beam body, and the outlet is provided in the M^{th} beam body.

14. The battery device according to any one of claims 2 to 12, wherein the frame comprises M beam bodies, the M beam bodies are provided along the outer periphery of the accommodating space and are connected to each other end to end, a cavity is formed inside each of the beam bodies, the cavities of the M beam bodies are connected to each other to form the channel, and M is greater than or equal to 2;
the blocking component is provided at a position where a first beam body and an M^{th} beam body are connected, and separates a cavity of the first beam body and a cavity of the M^{th} beam body at the position where the first beam body and the M^{th} beam body are connected;
in a case where the number N of layers of the sub-channels is an even number, the inlet and the outlet are formed in the first beam body; and
in a case where the number N of layers of the sub-channels is an odd number, the inlet is formed in the first beam body, and the outlet is formed in the M^{th} beam body.

15. The battery device according to claim 13 or 14, wherein each of the beam bodies comprises two end faces that are opposite to each other in a length direction of the beam body, and the M beam bodies are connected to each other end to end via the end faces.

16. The battery device according to claim 14, wherein each of the beam bodies comprises a beam main body and N-1 first reinforcing ribs, the cavity is provided in the beam main body, and the N-1 first reinforcing ribs are provided in the cavity;
the first reinforcing ribs of every two adjacent beam bodies are butt-connected to form N-1 separating components, and the N-1 separating components divide the channel into N sub-channels in the direction intersecting with the extension direction of the channel;
the first reinforcing rib of at least one of the first beam body and the M^{th} beam body is provided with the communication hole; and
in the sub-channel provided with the inlet or the outlet, the communication hole is located at an end of the sub-channel away from the inlet or the outlet.

17. The battery device according to claim 16, wherein the case further comprises a first sealing member, and the first sealing member is clamped between the first reinforcing ribs of two adjacent beam bodies.

18. The battery device according to claim 13, wherein the case further comprises a plurality of connecting members, and a quantity of the connecting members matches a quantity of the beam bodies;
every two adjacent beam bodies are connected by each of the connecting members, a chamber is provided inside each of connecting members, and the cavities of the plurality of beam bodies are communicated through the chamber; and
the blocking component is provided at a position where the first beam body and the M^{th} beam body are connected by each of the connecting members.

19. The battery device according to claim 14, wherein the case further comprises a plurality of connecting members, and a quantity of the connecting members matches a quantity of the beam bodies;
every two adjacent beam bodies are connected by each of the connecting members, a chamber is provided inside each of connecting members, and the cavities of the plurality of beam bodies are communicated through the chamber; and
the blocking component is provided at a position where the first beam body and the M^{th} beam body are connected by each of the connecting members.

20. The battery device according to claim 19, wherein the beam body comprises a beam main body and N-1 first reinforcing ribs, the cavity is provided in the beam main body, and the N-1 first reinforcing ribs are provided in the cavity;
each of the connecting members comprises a connecting main body and N-1 second reinforcing ribs, the connecting main body is connected to the beam main bodies of two adjacent beam bodies, the cavity is provided in the connecting main body, and the N-1 second reinforcing ribs are provided in the cavity;
each of the second reinforcing ribs is butt-connected to the first reinforcing ribs of two adjacent beam bodies to form N-1 separating components, and the N-1 separating components divide the channel into N layers of sub-channels in the direction intersecting the extension direction of the channel;
the first reinforcing rib of at least one of the first beam body and the M^{th} beam body is provided with the communication hole; and
in the sub-channel provided with the inlet or the outlet, the communication hole is located at an end of the sub-channel away from the inlet or the outlet.

21. The battery device according to claim 20, wherein the case further comprises a second sealing member, and the second sealing member is connected between the second reinforcing rib and the first reinforcing rib.

22. The battery device according to any one of claims 1 to 21, further comprising: a pressure relief mechanism, wherein the pressure relief mechanism is communicated with the outlet.

23. An electric device, comprising the battery device according to any one of claims 1 to 22, wherein the battery device is configured to store or provide electric energy.
